Europäisches Patentamt

European Patent Office

Office européen des brevets

(19)

(11) EP 0 532 927 B1

(12) **EUROPEAN PATENT SPECIFICATION**

(45) Date of publication and mention
of the grant of the patent:
**21.02.1996  Bulletin 1996/08**

(51) Int Cl.$^6$: **G01N 21/88**, G03F 9/00

(21) Application number: **92114182.6**

(22) Date of filing: **20.08.1992**

(54) **Automated photomask inspection apparatus**

Gerät zur automatischen Prüfung von Photomaske

Appareil pour l'inspection automatisée d'un masque photographique

(84) Designated Contracting States:
**DE FR GB**

(30) Priority: **22.08.1991 US 748984**

(43) Date of publication of application:
**24.03.1993  Bulletin 1993/12**

(73) Proprietor: **KLA INSTRUMENTS CORPORATION
San Jose, CA 95161 (US)**

(72) Inventors:
• **Whil, Mark Joseph
Tracy, California 95376 (US)**

• **Fu, Tao-Yi
Fremont, California 94539 (US)**

(74) Representative: **Riebling, Peter, Dr.-Ing.,
Patentanwalt
D-88113 Lindau (DE)**

(56) References cited:
EP-A- 0 244 781          WO-A-89/12224
US-A- 4 834 353          US-A- 5 018 212

• AT & T TECHNICAL JOURNAL vol. 65, no. 1,
January 1986, New York US, pp. 68-77; J.G. DE
LA ROSA et al.: 'Wafer inspection with a laser
scanning microscope'
• PATENT ABSTRACTS OF JAPAN vol. 12, no. 68
(P-672) 3 March 1988 ; & JP-A-62 208 440
• PATENT ABSTRACTS OF JAPAN vol. 11, no.
223 (P-597) 21 July 1987 ; & JP-A-62 038 541

## Description

## BACKGROUND OF THE INVENTION

### Field of the Invention

The present invention relates generally to electro-optical inspection systems, and more particularly to an automated photomask inspection apparatus for detecting defects on optical masks and reticles and the like.

### Brief Description of the Prior Art

Integrated circuits are made by photolithographic processes which use photomasks or reticles and an associated light source to project a circuit image onto a silicon wafer. A high production yield is contingent on having defectless masks and reticles. Since it is inevitable that defects will occur in the mask, these defects have to be found and repaired prior to using the mask.

Automated mask inspection systems have existed for over 15 years. The earliest such system, the Bell Telephone Laboratories AMIS system (John Bruning et al., "An Automated Mask Inspection System - AMIS", IEEE Transactions on Electron Devices, Vol. ED-22, No. 7 July 1971, pp 487 to 495), used a laser that scanned the mask. Subsequent systems used a linear sensor to inspect an image projected by the mask, such as described by Levy et al. (U.S. Patent 4,247,203, "Automatic Photomask Inspection System and Apparatus") who teach die-to-die inspection, i.e., inspection of two adjacent dice by comparing them to each other. Alternately, Danielson et al. (U.S. Patent 4,926, 489, "Reticle Inspection System") teach die-to-database inspection, i.e. inspection of the reticle by comparison to the database from which the reticle was made.

As the complexity of integrated circuits has increased, so has the demand on the inspection process. Both the need for resolving smaller defects and for inspecting larger areas have resulted in much greater speed requirements , in terms of number of picture elements per second processed . The increased demands have given rise to improvements described in a number of subsequently issued patents , such as U.S. Patent 4,247,203, entitled "Automatic Photomask Inspection System and Apparatus" , Levy et al., issued January 27, 1981; U.S. Patent 4,579,455, entitled "Photomask Inspection Apparatus and Method with Improved Defect Detection" , Levy et al. , issued April 1 , 1986 ; U.S. Patent 4,633,504, entitled "Automatic Photomask Inspection System Having Image Enhancement Means", Mark J . Wihl, issued December 3 0 , 1986 ; and U.S. Patent 4,805,123, entitled "Automatic Photomask Inspection and Reticle Inspection Method and Apparatus Including Improved Defect Detector and Alignment Subsystem" , Specht et al., issued February 14, 1989 . Also of relevance is some prior art in the wafer inspection area, such as U.S. Patent 4,644,172, entitled "Electronic Control of an Automatic Wafer Inspection System", Sandland et al., issued February 17, 1987.

Another force driving the development of improved inspection techniques is the emergence of phase shift mask technology. With this technology it will be possible to print finer linewidths, down to 0.25 micrometers or less. This technology is described by Burn J. Lin, "Phase-Shifting and Other Challenges in Optical Mask Technology", Proceedings of the 10th Annual Symposium on Microlithography, SPIE, - the International Society of Optical Engineering, Vol. 1496, pages 54 to 79. The above improvements teach the automatic detection of defects on conventional optical masks and reticles. In all of these systems, conventional lighting is used and the images are captured b y linear array sensors . These two system choices limit the signal-to-noise ratio and hence the speed of inspection.

The U.S. Patent No. 5,018,212 entitled ,,Defect Area Consolidation For Patterns Inspector", Manns et. al., issued May 21, 1991 discloses a laser pattern inspection and/or writing system which inspects or writes a pattern on a target on a stage by rasterscanning the target pixels. The system includes a laser light source, a modulator, a chirp deflector and an XY movable stage.

## SUMMARY OF THE INVENTION

An important object of present invention is to provide a novel defect detection apparatus and method which can use both transmitted and reflected light to inspect a substrate.

Another object of the present invention is to provide a device of the type described in which surface elevations above a reference elevation are optically determined using inter-ferrometric principals and used as indicators of defects.

Another object of the present invention is to provide a device of the type described which uses the same optical system to detect defects and measure line widths. The invention relates to apparatus according to claims 1 to 4 and methods according to claims 44 to 48. Briefly, a preferred embodiment of the present invention includes an XY stage (12) for transporting a substrate ( 14 ) under test in a serpentine path in an XY plane, an optical system (16) including a laser (30) , a transmission light detector (34), a reflected light detector (36) , optical elements defining reference beam paths consisting of optical means including a variable magnification subsystem for focussing the laser beam on the substrate and means for rotating the direction of deflection of said beam of light so that it has a desired relationship to the predetermined path , further illuminating beam paths between the laser, the substrate and the detectors and an acousto-optical beam scanner (40, 42) for reciprocatingly scanning the illuminating and reference beams relative to the substrate surface, and an electronic control, analysis and display system for controlling the operation of the stage and optical system and for interpreting and storing the signals output by the detectors. The apparatus can operate in a die-to-die comparison mode or a die-to-database mode.

One advantage of the present invention is that it uses a laser light source and hence has a much higher brightness to scan the mask. It differs from the AMIS system described by Bruning et al. in that it employs an electro-optical deflection method instead of a mechanical system. Obviously the electro-optical method is faster and more flexible than a mechanical device. However, even conventional electro-optical deflections do not have sufficient speed to meet system requirements. In the present invention the speed is further enhanced by the use of a deflection apparatus previously described for laser beam recording by U.S. Patent 3,851,951 to Jason H. Eveleth, entitled "High Resolution Laser Beam Recorder with self-Focusing Acousto-Optic Scanner", issued December 3, 1974.

Another advantage is the use of a stage that has only two degrees of freedom. Prior art also incorporated a rotational capability at a considerable cost and complexity. In the present invention the effective direction of scanning is controlled by driving both axes of the stage simultaneously.

Another significant departure from previous art is the ability of the present system to simultaneously detect defects with both transmitted and reflected light. This capability is significant because the additional information can be helpful in determining the nature of the defect and thereby permits the automatic classification of defects.

Yet another advantage of the present invention is its ability to inspect phase shift masks. It is anticipated that phase shift mask technology will be used in the 1990's to achieve linewidths of 0.10 micrometers. In the present invention the phase shift material can be measured at all points on a mask area at the normal scanning speed of the system.

Also advantageous is the ability of the present system to perform linewidth measurement on the mask. This is a significant advantage because heretofore two different types of instruments were employed to do both defect detection and linewidth measurement. The ability to use a single instrument results in a saving of time and, possibly more important, in less handling of the mask, which in turn is significant in contamination control.

A novel feature of the present invention is the autofocusing method employed. Previous mask inspection systems used autofocus systems that were affected by the pattern on the mask. The present invention functions independently of the pattern.

A significant innovation of the present system is also the two-axis preloading of the stage air bearings. Exceptional stiffness is achieved by this angular loading method.

Also new is the method of correcting for variations of light intensity. In the prior art the spatial non-uniformity of the illumination was determined before an inspection but no provisions existed for compensating for changing non-uniformity during inspection or, more likely, variations of the absolute level of intensity during the inspection. In the present invention the intensity is constantly monitored and immediately compensated in real time. Hence, variations of the primary light source with time do not affect the accuracy of the inspection process.

Yet another new capability of the present invention is to inspect the mask at substantially the same wave length as used for wafer printing (exposure) through the mask. With advances in technology, increasingly shorter wavelengths are used for printing. Because the appearance of defects changes depending on the wavelength of the illumination, it is important to employ approximately the same wavelength light source for both inspection and printing.

These and other objects and advantages of the present invention will no doubt become apparent to those skilled in the art after having read the following detailed disclosure of the preferred embodiments illustrated in the several figures of the drawing.

## IN THE DRAWING

FIG. 1 is a simplified functional block diagram of a laser mask inspection system in accordance with the present invention;

FIG. 2 is a more detailed schematic representation of the optical subsystem depicted in FIG. 1;

FIG. 3 is a diagram illustrating the scanning path used in the die-to-die inspection mode;

FIG. 4 is a diagram illustrating the scanning path used in die-to-database inspection mode;

FIGS. 5 and 6 are diagrams illustrating possible beam cross sections used in the autofocus system;

FIG. 7 is a partially broken perspective drawing illustrating the XY stage;

FIG. 8 is a cross-section taken along the line 8-8 of Fig. 7 showing details of the construction frame of the stage;

FIG. 9 is a cross-section taken along the line 9-9 of Fig. 7 showing other details of the construction frame of the stage;

FIG. 10 is an illustration of a cross-section of a typical phase-shift mask showing in exaggerated scale an illustration of the phase-shifted output of the reflected beam detector;

FIG. 11 is an illustration of the sinusoidally varying detected signal intensity as the mask is scanned in phase shift measurement mode;

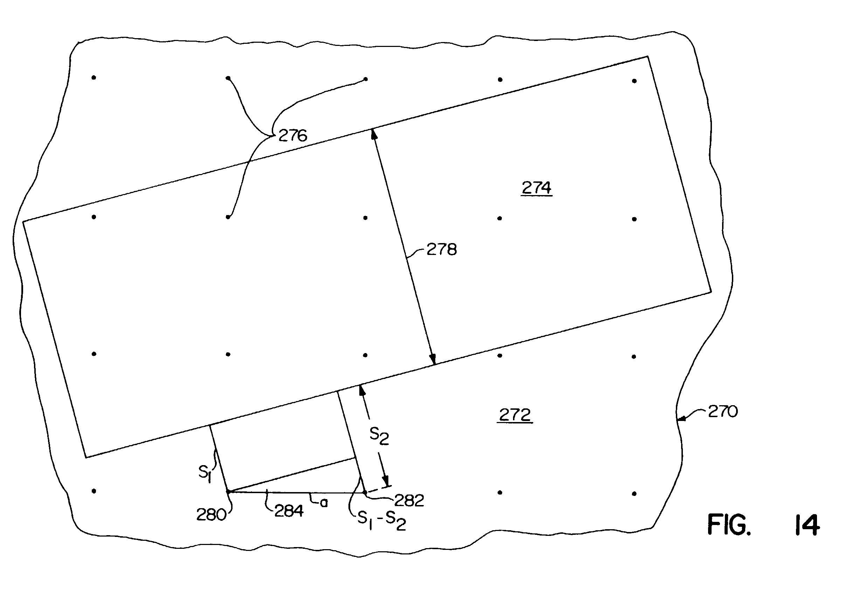

FIG. 12 is a block diagram depicting a phase-locked loop subsystem used to detect phase-shift material thickness; FIGS. 13a and 13b are simplified schematic diagrams respectively depicting operation of the optical subsystem used for measuring the phase-shift material thickness in

the transmitted and reflected light modes; FIG. 14 is an illustration used to describe the method of linewidth measurement.

## DETAILED DESCRIPTION OF THE PREFERRED EMBODIMENTS

Referring now to the drawing, a block diagram of an automatic optical inspection system in accordance with the present invention is shown at 10. The system is capable of inspecting substrates, such as reticles, photomasks, semi-conductor wafers and phase shift masks having a plurality of supposedly identical objects 33-37.

The system can perform several types of inspection: transmitted light inspection, reflected light inspection, simultaneous reflected and transmitted inspection, and phase shift measurement. In transmitted light inspection, light impinges on the substrate, a photomask for example, and the amount of light transmitted through the mask is detected. In reflected light inspection, the light reflecting from a surface of the substrate under test is measured. During phase shift inspection, the amount of phase shift between two reflected coherent light beams is detected at each point on the mask while transmitted light inspection takes place concurrently. The phase shift is proportional to the relative elevation of the surface from which the beams are reflected. As will be explained below, the transmitted light signal is used to qualify the phase-shift signal. In addition to these defect detection operations, the system is also capable of performing line width measurement.

In all of the defect detection operations a comparison is made between two images. In die-to-die inspection mode two areas of the substrate having identical features (dice) are compared with respect to each other and any substantial discrepancy is flagged as a defect. In the die-to-database inspection mode a defect is detected by comparing the die under test with corresponding graphics information obtained from the CADS (computer aided database system) database from which the die was derived. In the latter case the CADS database is converted to an image format as explained in U.S. Patent No. 4,926,489. (Danielson at al., "Reticle Inspection System", issued May 15, 1990).

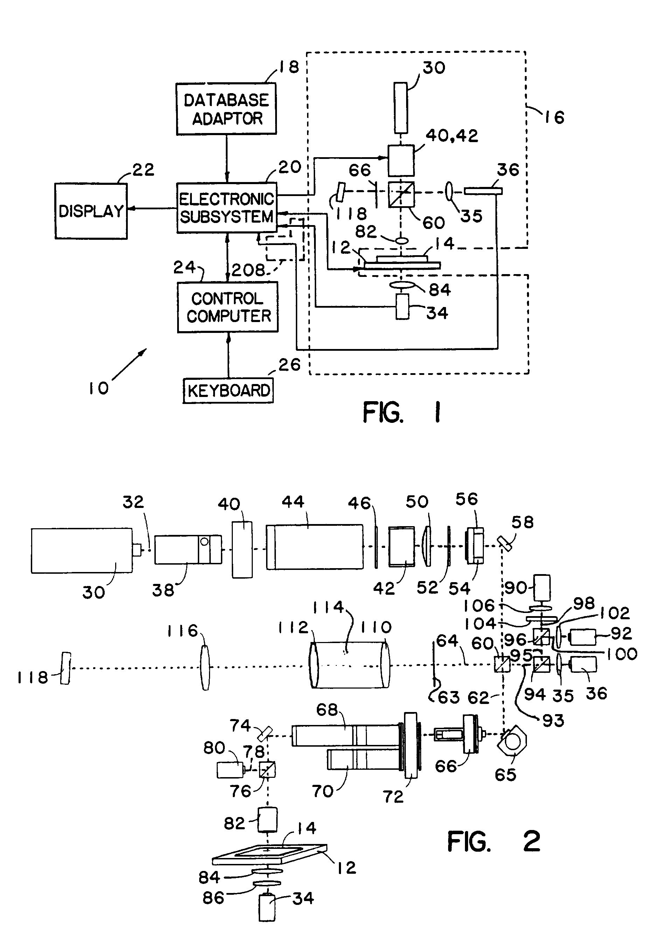

As depicted in the simplified block diagram of Fig. 1, a preferred embodiment of the system **10** is comprised of a stage **12** for carrying a substrate **14** to be inspected, an optical subsystem **16**, a data base adaptor **18**, an electronics subsystem **20**, a display **22**, a control computer **24** and a keyboard **26**.

### The Stage

Although a preferred embodiment of the stage 12 will be described in detail below, it suffices at this point to say that the stage is a precision device driver under control of subsystem 20 and capable of moving the substrate 12 under test in a serpentine fashion, within a single plane, relative to the optical axes of the optical subsystem 16 so that all or any selected part of the substrate surface may be inspected.

### Optical subsystem

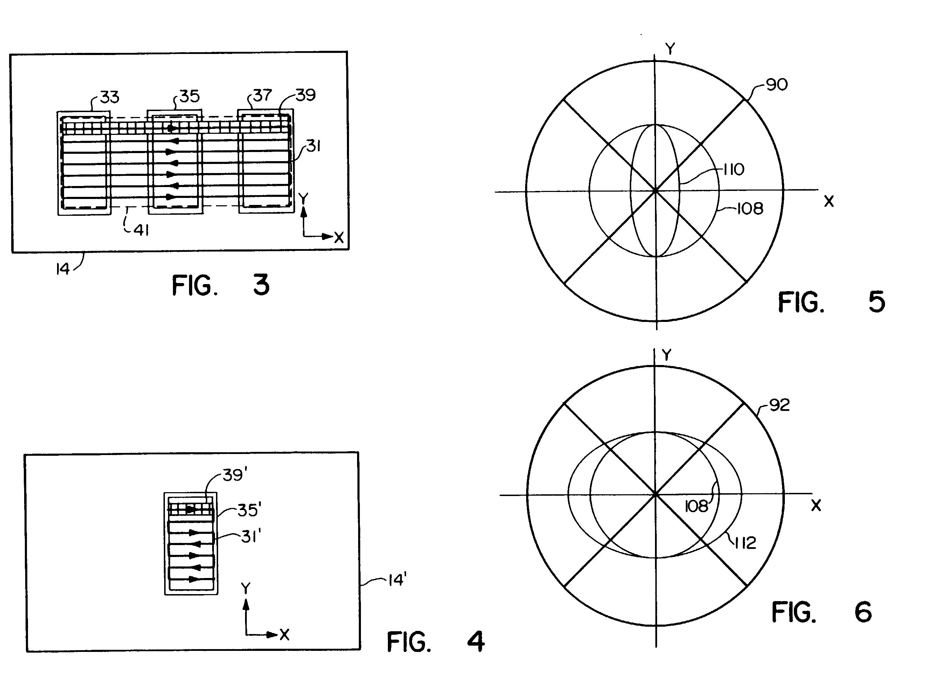

A detailed block diagram of the optical subsystem 16 is shown in Figure 2 and is essentially a laser scanner apparatus including a light source 30 and associated optics which cause a beam 32 of coherent light to be deflected back and forth over a small angle. As will be further described below, the beam sweep is in a direction such that, after passing through the optical system, the illuminated spot is moved from one side to another of the optical axis intersection with the substrate and is thus swept in a direction generally parallel to the Y-axis as viewed at the substrate 14. As the beam is swept, the stage 12 carrying the substrate 14 under test is caused to move back and forth in the direction of the X-axis, being incremented in the Y-direction at the end of each traverse so that the beam 32 is caused to sweep across a serpentine path 31 passing through a plurality of identified substrate subareas 33, 35, 37 (individual dice in the case of a photomask) as indicated in FIGS. 3 and 4. In this manner the entire surface area of the substrate (mask) 14 is swept in a series of contiguous swaths 39 by the laser beam. In the case of a transparent or partially transparent substrate, detection of the image is accomplished by a transmission detector. In the case of a reflective or partially reflective substrate , the light reflected from the substrate is detected by a reflected light detector 36 . As will be explained in more detail later, phase shift mask inspection is carried out by using both of these detectors simultaneously.

The light source 30 of the system is a laser , such as the Model 5490A5L-00C-115 made by Ion Laser Technology of Salt Lake City, Utah. The light beam 32, emitted by the laser 30, first passes through a spatial filter 38 and is then deflected by the combination of two acousto optic elements; an acousto-optic prescanner 40 and an acousto-optic scanner 42. These two elements deflect the light beam in the Y-direction and focus it in the X-direction in a manner similar to that described in US Patent 3,851,951. (Jason H. Eveleth, "High Resolution Laser Beam Recorder with Self-focusing Acousto-optic Scanner", issued December 3, 1974). The deflection system also includes a beam expander 44 and a quarter wave plate 46.

When the beam emerges from the scanner 42 , it is convergent in the Y-direction, but collimated in the X-direction. A cylindrical lens 50 then also focuses the beam in the X-direction, with the focal plane for both X and Y axes lying at a field stop 52 . The beam next passes through a quarter wave plate 54 and a relay lens 56.

The beam is then reflected by a mirror 58, the sole function of which is to fold the optical path. The redirected beam then enters a cube beam splitter 60 which divides it into paths 62 and 64 (optical axis). The latter path is used only in the phase measurement mode and is otherwise blocked by a shutter 63.

The beam continuing along path 62 is reflected by an oscillating mirror 65 which is held fixed during the inspection operation and is used only for displaying an image to an operator on an image display 22 (not shown in FIG. 2) during alignment and review. A dove prism 66 is used to rotate the direction of the scan about the optical axis. The output of prism 66 is fed to one of the telescopes 68 and 70 mounted on a rotatable turret 72 . The purpose of these telescopes is to vary the size of the scanning spot on the substrate 14 and thereby allow selection of the minimum detectable defect size. Since changing the magnification also varies the length of the scan, the swath width is also changed and therefore the inspection speed. (Only two telescopes are shown but obviously any number of telescopes, and therefore spot sizes, can be used.)

From the telescope the beam passes to a mirror 74 and then to a beam splitter 76 where the path is again split. The reflected portion of beam 78 is directed to a detector 80 which serves as a monitor of the beam intensity variation . The unreflected portion of the beam passes through an objective lens 82 which focuses the beam onto the substrate **14**. Light passing through the substrate **14** is then collected by a condenser lens **84** and a collector lens **86**, and focused onto the transmission detector **34**.

## Autofocus Subsystem

The autofocus function is based upon a monitoring of the shape of the light beam cross-section after it is passed through some anamorphic elements. The basic principal underlying the implementation is that a cylindrical lens produces astigmatism. In such a case a focussed beam first passes through best focus in one direction and then through best focus in the perpendicular direction. In between these two focal points along the beam path the beam cross section is oblong in one direction and transitions along the path through points where the beam cross section is circular and then oblong in a direction perpendicular to the previous direction. In this invention the optimum focus of the light impinging on the substrate is detected by monitoring the beam cross section of light reflected from the substrate **14**. The shape of the beam cross section is monitored by two silicon quadrature photodiodes **90** and **92**, such as made by Silicon Detector Corporation of Newbury Park, California.

As is explained in more detail below, the actual autofocus system consists of two optical paths which differ from each other in the direction of the astigmation. In one path the cylindrical lens has no curvature when viewed in the X-direction while in the other path, the cylindrical lens has no curvature in the Y-direction.

The autofocus beam **93** is split off from the reflected beam **95** directed along reflected detector path by a beam splitter **94**, and is redirected toward another beam splitter **96** which splits the beam into two paths **98** and **100**. In Figure 2 the X-coordinate is perpendicular to the paper and consequently, cylindrical lens **102** is shown with a curvature, while an identical element **104**, in the other path, appears as a plano-parallel element. The path leading to detector **90** also contains a spherical lens, **106**. The two identical quadrature detectors **90** and **92** detect a cross-section of each beam. As the substrate surface position, or thickness, varies, the beam cross section, as seen by the detectors, varies in the X-direction as shown in FIGS. **5** and **6** at **108**, **110** and **108**, **112** respectively. It is to be noted that on neither detector does the vertical (Y-direction) diameter of the illuminated area change. When the mask is in focus, both detectors are illuminated by a circular beam **108**. As the mask goes out of focus, the horizontal diameter shrinks on one detector (see FIG. **5**), while on the other one it increases (see FIG. **6**) as indicated by the outlines of the beam **110** and **112**, respectively. This changes the electrical output from the quadrature detectors. The focus correction signal $F_c$ is then:

$$\frac{(A_1\text{-}B_1) - (A_2\text{-}B_2)}{(A_1+B_1) + (A_2+B_2)} \qquad (1)$$

where

$A_1$ is the signal derived from quadrants along the X axis of **90**,
$A_2$ is the signal derived from quadrants along the X axis of **92**,
$B_1$ is the signal derived from quadrants along the Y axis of **90**,
$B_2$ is the signal derived from quadrants along the Y axis of **92**.

## Transmitted Light Inspection Mode

Ordinarily, transmission mode detection is used for defect detection on substrates such as conventional optical masks having transparent areas and opaque areas. As the laser beam scans the mask, the light penetrates the mask at transparent points and is detected by transmitted light detector **34** which is located behind the mask **14** and measures the light collected by condenser lens **84** and collector lens **86**.

## Reflected Light Inspection Mode

Reflected light inspection is normally performed on opaque substrates that contain image information in the form of developed photoresist features. Light reflected by the substrate passes backwards along the same optical path as described before but is then diverted by a polarizing beam splitter **60** into detector **36**. A condenser lens **35** projects the light onto the detector **36**. As previously stated, during reflected light inspection, shutter **66** is closed.

Reflected light inspection may also be used to detect contamination on top of opaque substrate surfaces.

## Phase Shift Material Thickness Measurement Mode

The measurement of phase shift is of interest only at points where the substrate is transparent, i.e., where there is no opaque geometry. The presence of opaque geometry is detected by the transmission detector **34** and only in the spaces separating such geometry is a phase shift measurement taken. During this operation shutter **66** is open and light from the laser reflected by splitter **60** travels through relay lenses **110** and **112**, which form a telescope **114**, and through a low numerical aperture objective lens **116** to a tilted mirror **118** where it is reflected back along the same path and through beam splitters **60** and **94**, and condenser lens **35** to reflected light detector **36**. At the same time, detector **36** is also illuminated by light which first passes through splitter 60 to be reflected from a point on the substrate and which on returning is reflected by splitter 60 to the detector. These two luminous beams interfere with each other, and the intensity of the light detected by detector **36** therefore varies as a function of the relative optical path length of the two paths 62 and 64. As will be explained in more detail later, this data is interpreted by the electronic subsystem to determine variations of thickness of phase shift material covering a given point on the substrate.

## Simultaneous Detection by More than one Type of Detector

It is important to note that transmitted and reflected light inspections, and the phase shift measurement operation are not mutually exclusive in time. Simultaneous transmitted and reflected detection can disclose the existence of an opaque defect sensed by the transmitted detector while the output of the reflected detector can be used to disclose the type of defect. As an example, either a chrome dot or a particle is opaque and hence will result in a dark output from the transmission detector, but reflective chrome defects also produce a high reflected light indication while a particle will typically reflect less. By using both reflected and transmitted detection one may locate a particle on top of chrome geometry. In general, one may determine signatures for certain types of defects, such as the ratio of their reflected and transmitted light intensities. This information can then be used to automatically classify defects.

Similarly, transmitted light detection and phase shift measurement can occur simultaneously. On a phase shift mask an opaque defect in a region covered by phase-shift material can be detected, and the absence of opaque material detected by the transmitted light detector **34** can be used to gate the phase shift measurement.

## Control Computer

The control computer, **24**, acts as the operator console and master controller of the system and is a device such as a SPARC computer made by Sun Microsystems of Mountain View, California. All system interfaces with the operator and the user's facilities are made through the control computer. Commands are issued to and status is monitored from all other subsystems so as to facilitate completion of the operator assigned tasks.

## Electronics Subsystem

The function of the electronics subsystem **20** is to interpret and execute the commands issued by control computer **24**. These functions are: digitize the input from detectors **34** and **36**; compensate these readings for variations in the incident light intensity; detect defects in the image and transfer the defect data to the control computer **24**; accumulate the output of the interferometers used to track the stage **12**; provide the drive for the stages linear motors; and monitor sensors which indicate status.

Except for the measurement of phase shift and line width information, all of the enumerated functions of control computer 24 **and subsystem 20** have been described in the above-mentioned U.S. Patents Nos. 4,247,203, 4,579,455, 4,633,504, 4,805,123, 4,926,489, and 4,644,172. It is to be noted that in the above patents the same functions are performed in many different ways and the particular approach adopted depended on the availability and suitability of integrated circuit devices at the time the system was being developed. Any of the cited approaches could be used.

## The Stage

The stage **18** is an air-bearing X-Y stage that is driven by a linear motor on each axis. The position of the stage along each axis is monitored by interferometers (not shown), such as the Model TIPS V, made by Teletrac Corporation.

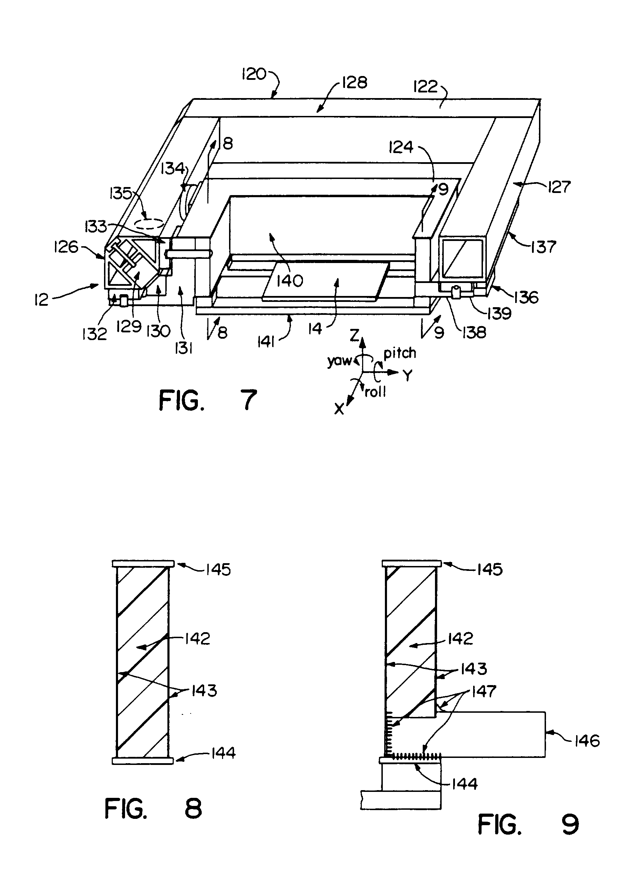

Stage **18** is shown in detail in Figure 7 with the front rail cut away to permit view of the principal elements. The stage has two degrees of freedom; it has no rotational capability. It is disclosed here for application in the described inspection system but could also be used in microlithography and any precision machining application.

The Y carriage **120**, in the shape of a frame **122**, carries the X stage **124**. The motion of both stages is controlled by linear motors and air bearings. The attractive force between the stator and the slider of each linear motor provides the preload of the linear bearings.

The Y carriage frame includes two guideways **126** and **127**, controlling the motion of the X stage **124** inside the carriage. The guideways are connected by two side rails **128**. (The front rail, the equivalent of **128**, is not shown.) The stator **129** of the X linear motor is imbedded inside the X guideway **126** in such a way that it attracts the X slider **130** attached to air-bearing housings **131** and preloads four of the five X air bearings **132**, **133**, **134** and **135**. A separate magnet **136** and ferromagnetic preload strip **137** provide the preload to air bearing **138**. Each bearing is equipped with a swivel, enabling rotation of the bearing pad about two axes, in addition to rotating the bearing itself, thus the only degree of freedom constrained by an air bearing is the translation in the direction normal to the pad surface.

The X stage carries the specimen **14** and is kinematically constrained by the five air bearings: the bearings **132** and **135** control the pitch of the X stage motion, and constrain the vertical translation in the Z direction, bearings **133** and **134** control the yaw of the X motion and constrain the horizontal translation in the Y direction. Bearing **138** nested in the housing **139** controls the roll of the X stage and constrains vertical translation of the stage in the Z direction. The specimen holder assembly **140** is attached to a lightweight composite frame **141** of the X stage.

The stage contains a number of novel features. One such feature is the use of the linear motor to preload the stage in two directions and thereby achieve an exceptional stiffness. This is accomplished by the arrangement of triangular cross section slider iron **130** and angular position of the stator **131**, so that the magnetic attraction force is at an angle to all four air bearings **132**, **133**, **134** and **135**.

Another innovative feature of the design is that the stator **129** of linear motor is imbedded inside the guideway **126** at an angle to the two walls of the guideway.

Also novel is the use of honeycomb material, such as Blue Seal, made by Hexcell of Dublin, California, for the construction of frame **140**. This reduces the mass of the stage, yet makes it very rigid. A cross-section of this construction taken along the line 8-8 is shown in Fig. 8 where cellular insert **142** is sandwiched between skins **143**. The bottom plate **144** and top plate **145** join the skins **143** and complete the box structure enclosing the insert **142**. The honeycomb material may be replaced by any number of light composite materials, such as Duocell, manufactured by ERG of Oakland, California.

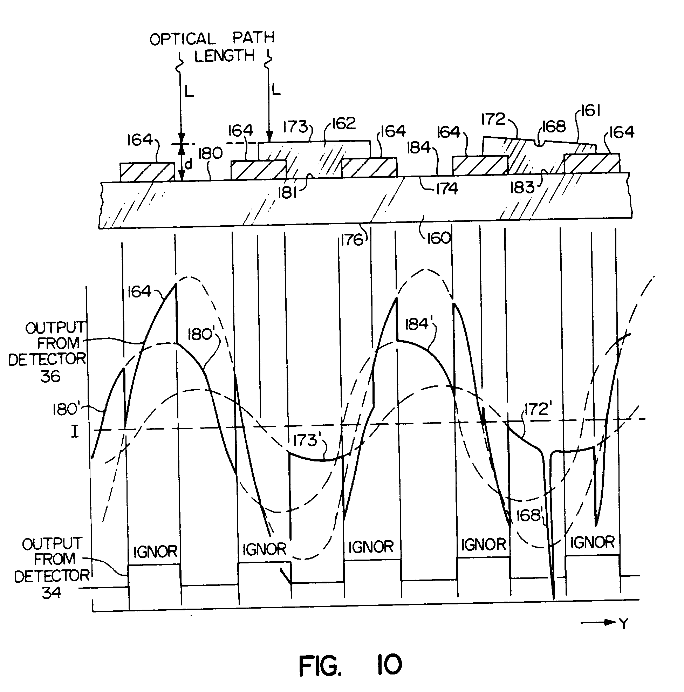

Also novel is the method of attaching the solid pieces **146** to the composite in the way that they penetrate one skin of the composite wall and are attached to the opposite skin and either of the top or bottom plates, as shown in Fig. 9, with joints **147** formed around the penetration through the wall, and between the solid piece and the inside of the opposite skin and the plate **144**.

## OPERATION OF THE DISCLOSED EMBODIMENT

### Alignment

Prior to starting the automatic inspection operation, the operator aligns the mask in the proper orientation and defines to the computer the "care area", i.e., the area to be inspected. FIG. 3 illustrates the desired orientation of the inspection path **31** with respect to dice **33**, **35**, and **37** shown here on a multi-die mask or reticle **14**. During inspection, the stage **12** is moved in a serpentine manner, following the path **31**, while the laser beam is deflected parallel to the Y-axis of the mask. As stage **12** moves in the X-direction, this Y-axis motion of the laser beam sweeps out a swath, **39**. Ordinarily the axes of mask **14** will not be parallel to the drive axis of the stage. Therefore, an X or a Y directional motion of the stage requires both of the drives of the stage to be driven simultaneously. The first task of the operator is therefore to define to the system the ratio of the speeds of the major axes of the stage. To accomplish this, the operator chooses two points known to him to lie on the same X-coordinate of the die. He then drives the stage to these points, while observing the image on image display **22**. The system notes the location of these points by measuring the travel with interferometers (not shown) along the drive axes of the stage. These measurements establish the direction cosines of the stage drive axes with respect to the X and Y axes of the mask. At this time the dove prism **66** (FIG. 2) is rotated to orient the deflection of the laser beam so that it is perpendicular to the X-directional travel of the stage. Next, the operator designates to the system the care area **41** (FIG. 3) of the die, the area to be inspected.

### Phase Shift Measurement Calibration

For reasons that will become apparent later, in the phase measurement mode, as the laser spot scans (in the Y-direction) a flat transparent surface parallel to the plane of the mask, the intensity varies sinusoidally, as shown by curve **200** in FIG. 11. Mathematically, the intensity I is:

$$I = A \sin [(2\pi y/w) - D)] + I_o \qquad (2)$$

where y is the distance of the pixel in question from the origin, w is a constant that is a function of the tilt angle of mirror **118**, D is the phase shift due to path length change as the result of the thickness of the phase shift material, A is the half-amplitude of the intensity, and $I_o$ is the intensity offset **204** due to stray light in the optics. These values are all determined during the phase shift measurement calibration part of the initialization. As the laser scans a flat uniform transparent area of the mask, the intensities at each picture element are digitized and stored in the computer. Then, $I_o$ is the average value of the intensities over integer cycles, and A can be computed from:

$$A = (I_{max} - I_o)/2 \qquad (3)$$

The value W is the periodicity of the sinusoid.

It is to be noted that $I_o$ and A are different for clear and phase shift material covered areas and therefore must be determined for both areas. The quantity D is a linear function of the thickness of the phase shift material and this relationship is determined by calibration on a known sample containing various thickness phase shift material features and remains constant while the system retains dimensional stability.

## The Inspection Process

Automatic inspection of a reticle ordinarily starts at the upper left hand corner of the care area and follows the serpentine pattern 31 (See Fig. 3.). As the stage slowly moves in the X direction, the laser beam rapidly sweeps back and forth in the Y-direction. In this manner a swath 39 is scanned and the digitized output of the detectors is stored in the electronics subsystem 20. When the swath reaches the left boundary of the care area of the second die 35 , image data derived from die 33 , and now stored in subsystem 20, is compared with the data derived from die 35. Any substantial difference is designated a defect. In a similar manner, the data from die 37 is also compared with the data derived from die 35.

When the scanning process reaches the right boundary of the care area of die 37, the stage is moved in the Y- direction an amount slightly less than the swath width and the stage starts a return trace in the X-direction. In this manner the care areas of the dice are traversed by the serpentine motion.

Die-to-database inspection, ordinarily performed on single die reticles, is similar to die-to-die inspection except that the comparison occurs between the die and a simulated image generated by database adaptor 18. Figure 4 illustrates the die-to-database scan path 31'.

## Review Operation

After completion of the automatic inspection operations, the operator reviews the defects by causing control computer 24 to move the stage 12 to the area of a particular defect and hold it there . The image is then scanned by using the acousto-optic scanners 40 and 42 to sweep the laser beam in the Y-direction, and byusing the oscillating mirror 65 to in effect move in the X-direction, and the digitized image is displayed on display 22. The operator may use the output of any of the detectors or the combination of outputs from more than one detector. If the operator desires, the different detector outputs may be superimposed and represented as separate colors on the display.

## Phase Shift Material Thickness Measurement

Figure 10 is an illustration of the cross section of one type of a phase shift mask. While the present example relates to a particular type of mask, on all types of masks, control of the thickness of phase shift material is a requirement and hence the technique described here is applicable to all types of phase shift masks.

The substrate 160 is typically of quartz on which opaque features 164 are deposited. These are typically thin layers of chrome. Phase shift features 161 and 162 made of transparent material will typically partially overlay part of the chrome 164 and some of the clear areas 181 and 183 between the features 164. Phase shift material filled transparent areas 181, 183 and clear areas 180, 184 typically alternate. The height of the upper surface 173 of the phase shift feature 162 above the level of the front, or upper, surface 174 of the quartz substrate is typically such that it produces a phase shift of 180 degrees with respect to a point 180 in the same plane but not covered by phase shift material.

Defects in phase shift masks may occur in several ways. There can be defects in the transparent areas, such as either excess chrome or dirt, or there can be missing chrome in a feature 164. Such defects are detected by the transmitted light detector 34 (FIG. 2) and are the subject of previously referenced prior art. The present invention is also capable of detecting defects in the phase shift layer 161 or 162. There are two types of defects: those where there is a sudden variation of thickness of the phase shift layer, and those in which there is a deviation from the desired thickness which is either constant, or varies slowly over the surface. The former type of defect, such as the divot 168 in layer 161, is detected by the transmitted light detector 34 because it scatters the light and hence does not allow the light to pass through the phase shift material. It therefore appears as a dark spot in transmission. Slowly varying surfaces 172 or incorrect thickness of the phase shift layer, such as depicted in feature 161, are detected by interferometric methods, as explained below.

A perfectly flat surface, such as 173 at the top of 162, parallel to the plane of the mask and with an optical path length L will produce fringes as the mask is scanned because, due to the tilted mirror 118, the wavefront of the reference beam is not parallel to the plane of the substrate. (In order to avoid any ambiguity in the direction of the change of the phase, the tilt of mirror 118 should be greater than the maximum expected slope of any surface such as 161.) The detector output in such a case is a sine wave, such as that shown in FIG. 11. A similar flat surface located at a path length L+D (see FIG. 10) will produce a sine wave of the same frequency but with a phase shift D with respect to curve 200. This second sine wave is shown as wave form 202.

As the mask is scanned in the Y-direction, the transmitted light detector 34 detects whether a particular pixel is fullly transparent. Only at such fully transparent pixels are reflected light intensity measurements taken and digitized. At such pixels, the reflected light intensity is determined and digitized. This is suggested by the depiction at the bottom of FIG. 10 wherein it is indicated that during the time that the scan is passing across the non-transparent feature 164, as determined by the output of detector 34, the output of detector 36 is ignored. From the intensity value, and from the Y-coordinate of the pixel, together with the values of A, w and $I_o$ determined during the calibration, electronic subsystem 20

determines d in Equation 2 and the corresponding path length variation at the pixel, i.e., the height of the feature surface above plane **174**.

It is to be noted that due to the periodic nature of a sinewave, there is an ambiguity because path length variations corresponding to a phase shift of 360 degrees are indistinguishable. However, sudden variations resulting in a 360° phase shift can occur only when the phase shift material contains a ridge. Such a ridge produces diffraction which is then detected in the transmission mode. Hence, the ambiguity due to a 360° phase shift is resolvable and it is possible to continuously, at every pixel, track the thickness of the phase shift material.

In practice, the mask substrates are not likely to be perfectly parallel to the image plane, nor is the substrate likely to be perfectly flat. However, these variations are gradual, and on a 5X phase shift mask one need consider variations only within a radius of 4-5 microns. Specifically, only the relative phase shift between two adjacent features is important, such as the relative phase shift between locations **180**, **162** and **184**. These points are likely to be less than 4 microns apart.

To determine whether there is a phase error of sufficient magnitude to indicate a defect on the substrate, the path length is computed at each transparent pixel covered by phase shift material **162** (FIG. 10). This value is then compared with the average of the path lengths of two adjacent points where there is no phase shift material, such as points **180** and **184**. If the difference in path length differs from an acceptable value by more than a predetermined threshold value at the print wave length, such as 10 degrees for example, the phase shift material thickness at the inspected point is marked as defective.

In addition to making path length comparisons between points on geometric features in the same vicinity, the system also checks for a missing or extra geometric feature, such as may occur in the pattern generation. In die-to-die mode, the path lengths of pixels at **173**, **180** and **184** (FIG. 10) of the **33** (FIG. 3) are compared with the path lengths at the corresponding pixels of die **35**. This comparison will disclose any missing geometric features, unless both dice **33** and **35** have the same error. Similarly, in die-to-database mode a comparison can be made between the path lengths associated with the previously designated pixels and the description of these pixels in the CADs database.

## Alternate Phase Shift Measurement Method

The above measurement technique uses a digital approach to determine the relative optical path length at grid points to determine the phase shift angle at every point. As explained below, one may also employ an analog method to find the phase shift angle.

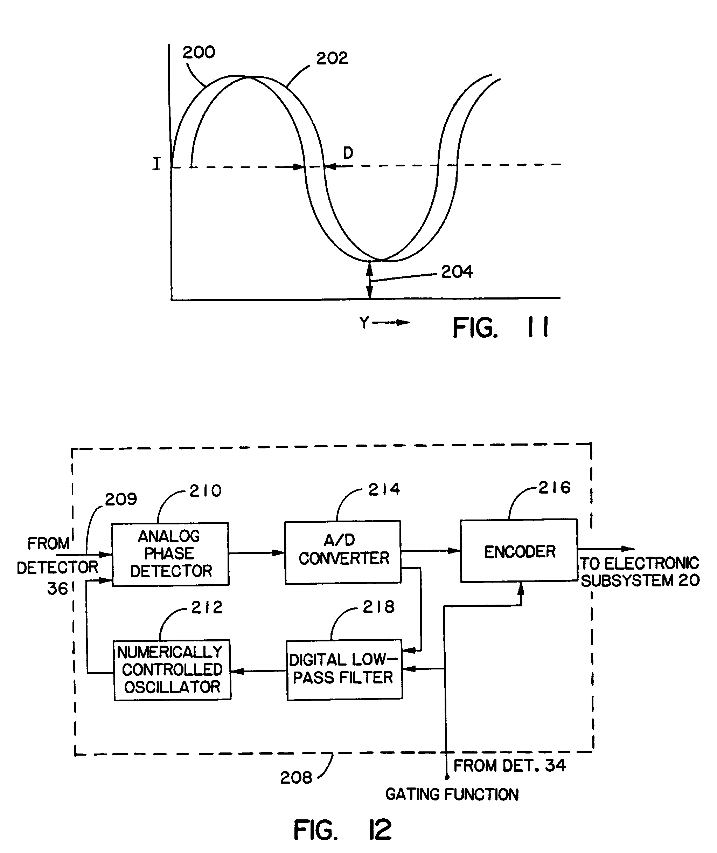

FIG. 12 illustrates the additional circuitry required by this method for insertion into the apparatus of FIG. 1 at **208** to determine the phase shift angle. The analog signal derived from detector **36** is fed to one input **209** of an analog phase detector **210** which also obtains another signal at **211** from a numerically controlled oscillator **212**. A signal proportional to the phase difference between these two signals is converted to a digital form by an eight bit A/D converter **214** and passed to an encoder **216** and also to a digital low pass filter **218**. The digital filter **218** and the encoder **216** are gated by a gating signal derived from detector **34**. The digital filter **218**, which functions as an integrator, accepts an input only when detector **34** indicates that the mask is transparent at the inspected point. Encoder **216** accepts the 8-bit output signal of the A/D converter **214** and shifts it right one bit. If the pixel is transparent at that point, the encoder inserts a 0 into the most significant position of the digital signal and transmits the remaining signal to subsystem **20** as the phase signal. Should detector **34** indicate that the pixel is opaque, the digital signal will be encoded as all ones, 11111111. This signifies to the subsystem **20** that the phase signal is invalid and should be disregarded.

The previously explained circuitry is a phase-locked-loop that follows slow variations of the phase, as might be caused by slowly varying phenomena, such as imperfect flatness of the mask. The output of the encoder **216**, when valid, indicates the path length variation in the local area.

## Alternate Phase Shift Optical System Implementation

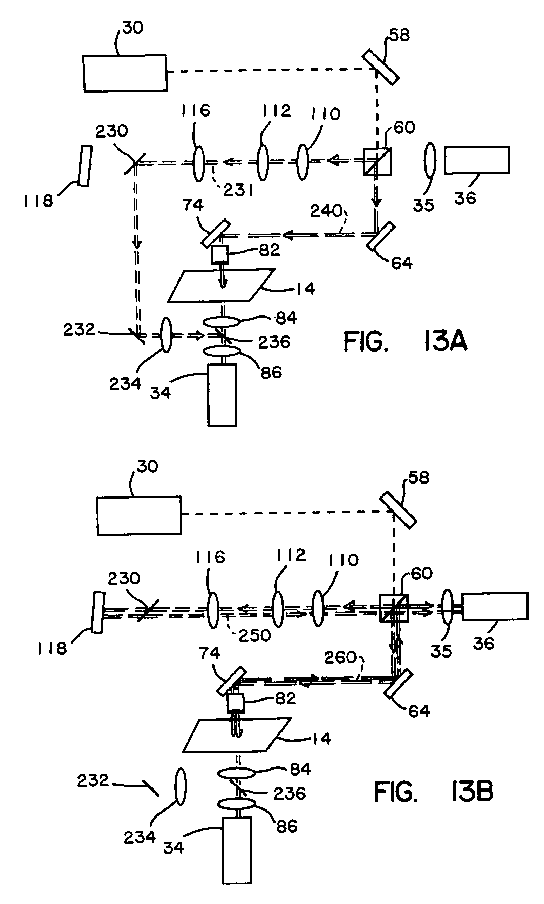

In some instances it is desirable to measure the actual phase shift, rather than infer the phase shift from the relative path length. This may be done by using transmitted interferometry. FIGS. 13a and 13b are simplified schematic diagrams, in which for simplicity many of the elements shown in FIG. 2 are omitted, but illustrate a variation of the preferred embodiment that permits measurement in either or both a transmit mode or a reflected mode using respectively transmitted light interferometry and simultaneous measurement of the reflected and transmitted interference pattern.

As depicted in Fig. 13a, to implement this alternative operating in the transmit mode, a pelicle beam splitter **230** is added which reflects light received from splitter **60** and produces a reference beam at detector **34** via **the path** 231 past tilted mirror **232**, objective lens **234** and another beam splitter **236**. The interference of the reference beam and the imaging beam passing along path **240** and through substrate **14** is detected at detector **34**.

In the reflected light mode, reference light split by splitter **60** is directed along the path **250** to tilted mirror **118** and returned to detector **36** where it interferes with imaging light passing through splitter **60** and along the path **260** to substrate **20** where it is reflected back along path **260** and reflected by splitter **60** into detector **36**.

It is to be noted that this alternative also permits the simultaneous measurement of the phase in both the reflected and transmitted modes.

Because lasers have a limited coherence length in both the reflected and transmitted interference modes, the path length should be approximately the same for the imaging beam path and the reference beam path.

**Line Width Measurement**

FIG. 14 shows a plan view of a small portion **270** of a mask. Area **272** is transparent and is crossed by a feature **274** that may either be opaque (chrome or other material) or transparent if the quartz substrate of the mask is covered by phase shift material. The system measures the intensity at equidistant grid points, **depicted at 276**. As explained more fully below, these intensity measurements are then used to determine the line width, i.e., the distance **278** across feature **274**.

It is to be noted that at each of the grid points **276** the intensity is the convolution of the point spread function of the optical system with the transmissivity profile of the feature. Typically, the transmissivity profile is a step function. Therefore, for a straight feature, as is shown in FIG. 14, the intensity measured at a particular grid point is a function of the perpendicular distance from the grid point to the edge of the feature (line **274**). The intensity at a particular point in the vicinity of a feature can thus be interpreted as the perpendicular distance from the point to the line. This interpretation is done in a simple table look-up operation in the computer **24** (FIG. 1). On the basis of the intensities at grid points **280** and **282**, distances $S_1$ and $S_2$ are known and the slope of the edge relative to a feature is:

$$\tan G = \frac{S_2 - S_1}{(a^2 - (S_2 - S_1)^2)^{1/2}} \qquad (4)$$

where a is the distance between the grid points **280** and **282** and G is angle **284**.

Once the slope of the edge of a feature (line) has been determined, the opposite edge of the line can be similarly located, and a verification can be made that it is parallel to the previously calculated line edge. On the basis of the intensities along the two edges of the line, the linewidth is calculated in control computer **24**.

The previously described method of line measurement is, strictly speaking, normally applicable only to conventional masks which have no surface areas covered by phase shift material. However, the technique described above may also be used for the measurement of phase shift features because , at the boundary between a clear area and an area covered by phase shift material , defraction of the incident light beam will occur and along this narrow boundary no light will be transmitted. The line width is the distance between the center of one boundary and the center of the opposite boundary.

Although the present invention has been described above in terms of preferred embodiments, it is anticipated that various alterations and modifications thereof will be apparent to those skilled in the art . For example , to avoid the need to sweep the laser beam during the scanning operation, instead of using the linear detector 34 in the preferred embodiment, one could use a time delay integrating sensor of the type described in the above-referenced <u>Levy</u> Patent No. 4,579,455 . With such modification, if a laser is used as the light source, coherence in the Y-direction would have to be destroyed by using a rotating ground glass. The coherence in the X-direction is destroyed by the time delay integrating sensor. It is therefore intended that the following claims be interpreted as covering all such alterations and modifications as fall within the scope of the invention.

**Claims**

1. An optical inspection system for inspecting substrates selected from the group consisting of photomasks, reticles, phase shift masks and semiconductor wafers, comprising:

stage means for carrying a substrate to be inspected along a predetermined path within an inspection plane;

laser means for providing a pixel illuminating beam of light;

optical means defining a first optical axis intersecting said inspection plane and along which said pixel illuminating beam of light is to be passed, said optical means including a variable magnification subsystem for focusing said beam of light on the substrate to be inspected, and means for rotating the direction of deflection of said beam of light so that it has a desired relationship to said predetermined path;

beam deflecting means disposed along said first optical axis between said laser means and said optical means and operative to deflect said beam of light in oscillatory fashion whereby said spot is caused to sweep across the surface of said substrate from one side to another of the intersection of said optical axis with said substrate and in a direction transverse to said predetermined path as the substrate is carried along said predetermined path, the limits of deflection of said beam of light from one side of said path to the other defining the width of a scanning swath over a care area of the substrate including at least a portion of one of said objects;

light detecting means for detecting changes in the intensity of said beam of light caused by its intersection with the inspected substrate and operative to develop scan signals corresponding thereto, said light detecting means including sampling means for sampling said scan signals to produce pixel sample signals; and

electronic means for comparing said pixel sample signals to corresponding reference signals whereby differences therebetween may be used to identify defects in the inspected substrate.

2. An optical inspection system for inspecting substrates such as photomasks, reticles, phase shift masks and semiconductor wafers, comprising:

stage means for carrying a substrate to be inspected along a predetermined path within an inspection plane;

laser means for providing a pixel illuminating beam of light;

optical means defining a first optical axis intersecting said inspection plane and along which said pixel illuminating beam of light is to be passed, said optical means being operative to focus said beam of light to illuminate a spot on the substrate to be inspected, the spot size determining at least one dimension of a pixel of the substrate, and for rotating the direction of deflection of said beam of light so that it has a desired relationship to said predetermined path;

beam deflecting means disposed along said first optical axis between said laser means and said optical means and operative to deflect said beam of light in oscillatory fashion whereby said spot is caused to sweep across the surface of said substrate from one side to another of the intersection of said optical axis with said substrate and in a direction transverse to said predetermined path as the substrate is carried along said predetermined path, the limits of deflection of said beam of light from one side of said path to the other defining the width of a scanning swath over care areas of the substrate including at least a portion of one of said objects;

light detecting means for detecting changes in the intensity of said beam of light caused by its intersection with pixel areas of the inspected substrate and operative to develop scan signals corresponding thereto;

electronic means for comparing said scan signals to corresponding reference signals whereby differences therebetween may be used to identify defects in the inspected substrate;

means for recording the substrate locations of said defects;

means for subsequently causing said stage means to reposition the inspected substrate such that a previously recorded location of a selected defect is continuously intersected by said optical axis;

oscillatory reflective means disposed along said optical axis for sweeping said beam of light back and forth in a direction orthogonal to the deflection caused by said beam deflecting means so as to cause said light detecting means to continuously generate display signals representative of the selected defect; and

display means responsive to said display signals and operative to provide a visual display of the selected defect.

3. An optical inspection system for inspecting substrates selected from the group consisting of photomasks, reticles, phase shift masks and semiconductor wafers, comprising:

laser means for providing a pixel illuminating beam of light;

optical means defining a first optical axis along which said pixel illuminating beam of light is to be passed, and including a means for rotating means for rotating the direction of deflection of said beam of light so that it has a desired relationship to said predetermined path;

stage means for moving a substrate to be inspected within an inspection plane intersected by said optical axis such that the point of intersection traces a serpentine path over at least a portion of the substrate including at least one of the objects;

beam deflecting means disposed along said first optical axis between said laser means and said optical means and operative to deflect said beam of light in oscillatory fashion from one side of the intersection of said optical axis with said substrate to another and in a direction transverse to said predetermined path such that, as the substrate is carried along said predetermined path, the deflection of said beam of light from one side of said path to the other defines a scanning swath over the portion of the substrate;

light detecting means for detecting changes in the intensity of said beam of light caused by pixel areas of the inspected substrate illuminated by said beam of light and operative to develop scan signals corresponding thereto; and

electronic means for comparing said scan signals to corresponding reference signals whereby differences therebetween may be used to identify defects in the inspected substrate and for recording the location of said defects on said substrate.

4. An optical inspection system for inspecting substrates selected from the group consisting of photomasks, reticles, phase shift masks and semiconductor wafers including a plurality of supposedly identical patterned objects disposed in an ordered array on a surface thereof, comprising:

laser means for providing a pixel illuminating beam of light;

optical means defining a first optical axis along which said pixel illuminating beam of light is to be passed, and including a means for means for rotating the direction of deflection of said beam of light so that it has a desired relationship to said predetermined path;

stage means for moving a substrate to be inspected within an inspection plane intersected by said optical axis such that the point of intersection traces a serpentine path over at least a portion of the substrate including at least one of the objects;

beam deflecting means along said first optical axis between said laser means and said optical means and operative to deflect said beam of light in oscillatory fashion from one side of the intersection of said optical axis with said substrate to another and in a direction transverse to said predetermined path such that, as the substrate is carried along said predetermined path, the deflection of said beam of light from one side of said path to the other defines a scanning swath over the portion of the substrate;

light detecting means for detecting changes in the intensity of said beam of light caused by pixel areas of the inspected substrate illuminated by said beam of light and operative to develop scan signals corresponding thereto;

electronic means for storing first scan signals developed as said scanning swath passes over a first of the patterned objects and for comparing the stored first scan signals to second scan signals developed as the scanning swath passes over a second of the patterned objects whereby differences therebetween may be used to identify defects in the inspected substrate; and

means for recording the locations of said defects on said substrate.

5. An optical inspection system as recited in any one of claims 1-4 wherein said stage means is constrained to move with no more than two degrees of freedom , and is driven by x-direction and y-direction inputs generated by said electronic means.

6. An optical inspection system as recited in claim 5 wherein said stage means is an X/Y air bearing stage driven by linear motors including stators and sliders separated by air bearing means, the stators being configured to preload the air bearings of each slider in at least two directions.

7. An optical inspection system as recited in any one of claims 1-4 wherein said laser means is selected to have a predetermined wavelength of substantially the same wavelength as a light source to be later used in association with the inspected substrate during wafer processing.

8. An optical inspection system as recited in any one of claims 1-4 wherein said optical means also includes means defining a second optical axis along which said beam of light may be passed, and having a portion thereof in common with a portion of said first optical axis, the optical path lengths of said first and second optical axes being substantially equal so that the two axes experience substantially identical thermal variation, said second optical axis including a tilted mirror for reflecting the beam of light back along said second optical axis and onto said light detecting means for interferometric comparison with light reflected along said first optical axis from the substrate under test.

9. An optical inspection system as recited in any one of claims 1-4 wherein said light-detecting means includes a first detector for detecting the intensity of light reflected from said substrate and generating first scan signals.

10. An optical inspection system as recited in any one of claims 1-4 wherein said light detecting means further includes a second detector for detecting the intensity of light from said beam passing through the substrate under inspection and for generating second scan signals.

11. An optical inspection system as recited in claim 10 wherein said electronic means compares said first and second scan signals to first and second reference signals and determines both the existence and type of any defect encountered.

12. An optical inspection system as recited in any one of claims 1-4 wherein said light detecting means includes a transmitted light detector for detecting the intensity of light from said beam of light passing through the substrate under inspection and for generating corresponding scan signals.

13. An optical inspection system as recited in any one of claims 1-4 wherein said light detecting means includes means for monitoring the intensity of said beam of light and generating an output which may be used by said electronic means to provide beam intensity variation correction to said scan signals.

14. An optical inspection system as recited in any one of claims 1-4 wherein said beam deflecting means includes an acousto-optic modulator for causing said beam of light to be deflected back and forth over a relatively small angle, said angle being the factor which determines the width of each scanning swath.

15. An optical inspection system as recited in any one of claims 1-4 and further comprising database means containing ideal data corresponding to the substrate under inspection, said data being selectively read out to generate said reference signals.

16. An optical inspection system as recited in any one of claims 1-4 and further comprising means for storing said scan signals, the stored signals being subsequently used to provide said reference signals to which presently scanned signals may be compared.

17. An optical inspection system as recited in any one of claims 1-4 wherein said light detecting means includes a first detector for detecting light transmitted through the substrate being inspected and a second detector for simultaneously detecting light reflected from the substrate being inspected, said first and second detectors respectively generating first and second signals from which said electronic means can determine both the existence of a defect and the type of defect detected.

18. An optical inspection system as recited in any one of claims 1-4 and further comprising means disposed along a second optical axis intersecting said first optical axis and operative to develop a beam of light for interfering with light reflected from the substrate under inspection to develop an interference beam for detection by said light detecting means such that the intensity of the interference beam detected by said light detecting means may be used by said electronic means to determine variations in the height of the inspected surface material above a particular surface on the inspected substrate.

19. An optical inspection system as recited in any one of claims 1-4 and further comprising means defining an auto-focus optical axis intersecting said first optical axis and including means for introducing astigmatism in the beam reflected from the surface of the inspected substrate , and auto-focus detecting means for measuring the shape of the astigmatized beam and determining therefrom the degree of focus of the beam on the substrate , said auto-focus detecting means generating correction signals for input to said electronic means.

20. An optical inspection system as recited in claim 19 and further comprising means for splitting said auto-focus optical axis into first and second branches having oppositely polarized anamorphous elements which distort the shape of the light beam passed therethrough, and wherein said auto-focus detecting means includes a first image shape detector associated with said first branch and a second image shape detector associated with said second branch, the outputs of said image shape detectors being used by said electronic means to determine whether said beam of light is in focus at said inspection plane, and if not in focus to determine the degree and direction in which the beam is out of focus.

21. An optical inspection system as recited in claim 20 wherein said first and second image shape detectors are appropriately oriented quadrature detectors.

22. An optical inspection system as recited in any one of claims 1-4 wherein said electronic means measures the magnitudes of said scan signals corresponding to predetermined grid points on the surface of the substrate under inspection and then uses such measurements to determine the surface dimensions of substrate features.

23. An optical inspection system as recited in claim 16 wherein said light-detecting means includes a first detector for detecting the intensity of light reflected from the substrate under inspection and for generating first scan signals commensurate therewith.

24. An optical inspection system as recited in claim 23 wherein said light detecting means further includes a second detector for detecting the intensity of light from said beam passing through the substrate under inspection and for generating second scan signals commensurate therewith.

25. An optical inspection system as recited in claim 24 wherein said electronic means compares said first and second scan signals to corresponding first and second reference signals and determines both the existence and type of any defect encountered.

26. An optical inspection system as recited in claim 25 wherein said light detecting means includes means for monitoring the intensity of said beam of light and generating an output which may be used by said electronic means to provide beam intensity variation correction to said scan signals.

27. An optical inspection system as recited in claim 26 and further comprising means defining an auto-focus optical axis intersecting said first optical axis and including means for introducing astigmatism in the beam reflected from the surface of the inspected substrate, and auto-focus detecting means for measuring the shape of the astigmatized beam and determining therefrom the degree of focus of the beam on the substrate, said auto-focus detecting means generating correction signals for input to said electronic means.

28. An optical inspection system as recited in claim 27 and further comprising means for splitting said auto-focus optical axis into first and second branches having oppositely polarized anamorphous elements which distort the shape of the light beam passed therethrough, and wherein said auto-focus detecting means includes a first image shape detector associated with said first branch and a second image shape detector associated with said second branch, the outputs of said image shape detectors being used by said electronic means to determine whether said beam of light is in focus at said inspection plane, and if not in focus to determine the degree and direction in which the beam is out of focus.

29. An optical inspection system as recited in claim 28 wherein said first and second image shape detectors are appropriately oriented quadrature detectors.

30. An optical inspection system as recited in claim 29 wherein said electronic means measures the magnitude of said scan signals corresponding to predetermined grid points on the surface of the substrate under inspection and then uses such measurements to determine the surface dimensions of substrate features.

31. An optical inspection system as recited in claim 30 wherein said stage means is an X/Y air bearing stage driven by linear motors including stators and sliders separated by air bearing means, the stators being configured to preload the air bearings of each slider in at least two directions.

32. An optical inspection system as recited in claim 31 wherein said optical means includes means which may be used to rotate the direction of deflection of said beam of light so that it has a desired relationship to said predetermined path.

33. An optical inspection system as recited in claim 15 wherein said light-detecting means includes a first detector for detecting the intensity of light reflected from said substrate and generating first scan signals commensurate therewith.

34. An optical inspection system as recited in claim 33 wherein said light detecting means further includes a second detector for detecting the intensity of light from said beam passing through the substrate under inspection and for generating second scan signals commensurate therewith.

35. An optical inspection system as recited in claim 34 wherein said electronic means compares said first and second scan signals to first and second reference signals and determines both the existence and type of any defect encountered.

36. An optical inspection system as recited in claim 35 and further comprising means defining an auto-focus optical axis intersecting said first optical axis and including means for introducing astigmatism in the beam reflected from the surface of the inspected substrate, and auto-focus detecting means for measuring the shape of the astigmatized beam and determining therefrom the degree of focus of the beam on the substrate, said auto-focus detecting means generating correction signals for input to said electronic means.

37. An optical inspection system as recited in claim 36 and further comprising means for splitting said auto-focus optical axis into first and second branches having oppositely polarized anamorphous elements which distort the shape of the light beam passed therethrough, and wherein said auto-focus detecting means includes a first image shape detector associated with said first branch and a second image shape detector associated with said second branch , the outputs of said image shape detectors being used by said electronic means to determine whether said beam of light is in focus at said inspection plane, and if not in focus to determine the degree and direction in which the beam is out of focus.

38. An optical inspection system as recited in claim 37 wherein said electronic means measures the magnitude of said scan signals corresponding to predetermined grid points on the surface of the substrate under inspection and then uses such measurements to determine the surface dimensions of substrate features.

39. An optical inspection system as recited in claim 38 wherein said stage means is an X/Y air bearing stage driven by linear motors including stators and sliders separated by air bearing means, the stators being configured to preload the air bearings of each slider in at least two directions.

40. An optical inspection system as recited in any one of claims 1-4 wherein said light detecting means includes a transmission detector disposed along said first optical axis on the side of said inspection plane opposite the side including said laser means and operative to detect transmitted light passing through an inspected substrate, and wherein said optical means further includes means defining a second optical axis along which said beam of light may be passed, said second optical axis not intersecting said inspected substrate but having at least a portion thereof in common with said first optical axis and intersecting said transmission detector whereby interferometric comparison between said beam of light and said transmitted light may be conducted.

**41.** An optical inspection system as recited in claim 40 wherein said optical means also includes means defining a third optical axis along which said beam of light may be passed, and having a portion thereof in common with a portion of said first optical axis , the optical path lengths of said second and third optical axes being substantially equal so that the two axes experience substantially identical thermal variation, said third optical axis including a tilted mirror for spatially shifting and reflecting the spatially shifted beam of light back along said third optical axis and onto said reflection detector for interferometric comparison with light reflected along said first optical axis from the inspected substrate.

**42.** An optical inspection system as recited in claim 10 and further including circuit means responsive to said first and second scan signals and operative to develop gated signals for input to said electronic means to indicate defects in the inspected substrate as a function of the phase error between the light reflected from the surface of the substrate and the light passing through the inspected substrate.

**43.** An optical inspection system as recited in claim 42 wherein said circuit means includes:
an analog phase detector for comparing said first scan signal to a reference signal to develop an analog signal proportional to the phase difference therebetween, means for converting said analog signal to a digital signal, and
encoder means gated by said second scan signal and operative to generate said gated signals.

**44.** A method of inspecting substrates selected from the group consisting of photomasks, reticles, phase shift masks and semiconductor wafers, comprising the steps of:

transporting a substrate to be inspected along a predetermined path within an inspection plane;
directing a beam of light along a first optical axis intersecting said inspection plane and focusing said beam of light to illuminate a spot of a selected size on the substrate to be inspected;
sweeping said beam of light in oscillatory fashion from one side to another of the intersection of the optical axis with the substrate, via means for rotating the direction of sweep, the sweep being in a direction transverse to said predetermined path whereby care areas of the substrate including at least one of said objects are scanned in swaths the width of which is determined by the beam sweep limits;
detecting changes in the intensity of said beam of light caused by its intersection with pixel areas of the inspected substrate and developing scan signals corresponding thereto;
sampling said scan signals to produce pixel sample signals; and
comparing said pixel sample signals to corresponding reference signals and using differences therebetween to identify defects in the inspected substrate.

**45.** A method of inspecting substrates selected from the group consisting of photomasks, reticles, phase shift masks and semiconductor wafers, comprising the steps of:

transporting a substrate to be inspected along a predetermined path within an inspection plane;
providing a pixel illuminating beam of light;
providing optical means defining a first optical axis intersecting said inspection plane and passing said pixel illuminating beam of light along said optical axis, and selectively focusing said beam of light to illuminate a spot on the substrate to be inspected, the spot size determining at least one dimension of a pixel of the substrate;
causing said beam of light to sweep in oscillatory fashion across the surface of said substrate from one side to another of the intersection of said optical axis with said substrate and in a direction transverse to said predetermined path as the substrate is carried along said predetermined path, and said beam of light to be rotated in its direction of sweep so that said beam of light has a desired relationship to said predetermined path, the limits of deflection of said beam of light from one side of said path to the other defining the width of a scanning swath over a care area of the substrate including at least a portion of one of said objects;
detecting changes in the intensity of said beam of light caused by its intersection with pixel areas of the inspected substrate and developing scan signals corresponding thereto;
sampling said scan signals to produce pixel sample signals; and
comparing said pixel sample signals to corresponding reference signals whereby differences therebetween may be used to identify defects in the inspected substrate.

**46.** A method of inspecting substrates such as photomasks, reticles, phase shift masks and semiconductor wafers, comprising the steps of:

transporting a substrate to be inspected along a predetermined path within an inspection plane;
using a laser means to provide a pixel illuminating beam of light;

providing an optical means defining a first optical axis intersecting said inspection plane and along which said pixel illuminating beam of light is passed, said optical means being operative to focus said beam of light to illuminate a spot on the substrate to be inspected, the spot size determining at least one dimension of a pixel of the substrate;

causing said beam of light to be deflected in oscillatory fashion across the surface of said substrate from one side to another of the intersection of said optical axis which said substrate and in a direction transverse to said predetermined path as the substrate is carried along said predetermined path, and said beam of light to be rotated in its direction of deflection so that said beam of light has a desired relationship to said predetermined path, the limits of deflection of said beam of light from one side of said path to the other defining the width of a scanning swath over care areas of the substrate including at least a portion of one of said objects;

detecting changes in the intensity of said beam of light caused by its intersection with pixel areas of the inspected substrate and developing scan signals corresponding thereto; comparing said scan signals to corresponding reference signals and using differences therebetween to identify defects in the inspected substrate;

recording the locations of said defects on said substrate;

subsequently causing said stage means to reposition the inspected substrate such that a previously recorded location of a selected defect is continuously intersected by said optical axis;

sweeping said beam of light back and forth in a direction orthogonal to the deflection caused by said beam deflecting means so as to cause said light detecting means to continuously generate display signals representative of the selected defect; and

using said display signals to provide a visual display of the selected defect.

47. A method of inspecting substrates selected from the group consisting of photomasks, reticles, phase shift masks and semiconductor wafers, comprising the steps of:

using a laser means to provide a pixel illuminating beam of light;

providing optical means defining a first optical axis along which said pixel illuminating beam of light is passed;

moving a substrate to be inspected within an inspection plane intersected by said optical axis such that the point of intersection traces a serpentine path over at least a portion of the substrate including at least one of the objects;

deflecting said beam of light in oscillatory fashion from one side of the intersection of said optical axis with said substrate to another via means for rotating the direction of deflection, the deflection being in a direction transverse to said predetermined path such that, as the substrate is carried along said predetermined path, the deflection of said beam of light from one side of said path to the other defines a scanning swath over the portion of the substrate;

detecting changes in the intensity of said beam of light caused by pixel areas of the inspected substrate illuminated by said beam of light and developing scan signals corresponding thereto; and

comparing said scan signals to corresponding reference signals whereby differences therebetween may be used to identify defects in the inspected substrate and recording the location of said defects on said substrate.

48. A method of inspecting substrates selected from the group consisting of photomasks, reticles, phase shift masks and semiconductor wafers including a plurality of supposedly identical patterned objects disposed in an ordered array on a surface thereof, comprising the steps of:

using a laser means to provide a pixel illuminating beam of light;

using an optical means to define a first optical axis along which said pixel illuminating beam of light is passed; using a stage means to move a substrate to be inspected within an inspection plane intersected by said optical axis such that the point of intersection traces a serpentine path over at least a portion of the substrate including at least one of the objects;

deflecting said beam of light in oscillatory fashion from one side of the intersection of said optical axis with said substrate to another via means for rotating the direction of deflection, the deflection being in a direction transverse to said predetermined path such that, as the substrate is carried along said predetermined path, the deflection of said beam of light from one side of said path to the other defines a scanning swath over the portion of the substrate;

rotating said deflected beam of light so that it has a desired relationship to said predetermined path;

detecting changes in the intensity of said beam of light caused by pixel areas of the inspected substrate illuminated by said beam of light and operative to develop scan signals corresponding thereto;

storing first scan signals developed as said scanning swath passes over a first of the patterned objects and comparing the stored first scan signals to second scan signals developed as the scanning swath passes over a second of the patterned objects and using differences therebetween may be used to identify defects in the inspected substrate; and

recording the locations of said defects on said substrate.

## Patentansprüche

1. Ein optisches Prüfsystem zur Prüfung von Substraten, ausgewählt aus der Gruppe von Photomasken, Rasterplatten, Phasenschiebermasken und Halbleiterwafern, bestehend aus:

einem Gestell, welches das zu prüfende Substrat entlang eines vorherbestimmten Pfades innerhalb einer Prüfebene trägt;
einem Laser, um einen punktbeleuchtenden Lichtstrahl erzeugt;
optischen Mitteln, die eine erste optische Achse definiert, welche die Prüfebene schneidet und entlang welcher der punktbeleuchtende Lichtstrahl geführt wird, wobei dieses optische Mittel ein Subsystem mit variabler Vergrößerung enthält, um den Lichtstrahl auf dem zu prüfenden Substrat zu fokussieren, und Mitteln um die Ablenkrichtung des Lichtstrahls zu drehen, so daß dieser eine gewünschte Beziehung zu dem vorherbestimmten Pfad hat;
das Stahlablenkmittel ist entlang der ersten optischen Achse zwischen dem Laser und dem optischen Mittel angeordnet und lenkt den Lichtstrahl in oszillierender Weise ab, wobei der Punkt dabei über die Oberfläche des Substrats streicht, von einer Seite des Schnittpunktes der optischen Achse mit dem Substrat zur anderen und in einer Richtung quer zum vorherbestimmten Pfad, während sich das Substrat auf dem vorherbestimmten Pfad bewegt, die Grenzen der Ablenkung des Lichtstrahls von einer Seite des Pfades zur anderen definieren die Breite einer Abtastschwade über einen Behandlungsbereich des Substrates und beinhaltet wenigstens einen Teil eines der Objekte;
lichtdetektierende Mittel, um Änderungen der Intensität des Lichtstrahls zu erfassen, welche durch dessen Schnitt mit dem zu prüfenden Substrat hervorgerufen werden, und dazu entsprechende Abtastsignale zu erzeugen, wobei diese lichtdetektierenden Mittel Abfragemittel aufweisen, welche die Abtastsignale abfragen, um Bildpunkt-Abtastsignale zu erzeugen;

elektronische Mittel, welche die Bildpunkt-Abfragesignale mit entsprechenden Referenzsignalen vergleichen, wobei auftretende Differenzen zwischen diesen zur Identifikation von Defekten auf dem geprüften Substrat herangezogen werden können.

2. Ein optisches Prüfsystem zur Prüfung von Substraten, ausgewählt aus der Gruppe von Photomasken, Rasterplatten, Phasenschiebermasken und Halbleiterwafern, bestehend aus:

einem Gestell, welches das zu prüfende Substrat innerhalb einer Prüfebene entlang eines vorherbestimmten Pfades trägt;
einem Laser, um einen punktbeleuchtenden Lichtstrahl erzeugt;
optischen Mitteln, die eine erste, die Prüfebene schneidende optische Achse definieren und entlang welcher der punktbeleuchtende Lichtstrahl geführt wird, wobei diese optischen Mittel ein Subsystem mit variabler Vergrößerung enthalten, um den Lichtstrahl auf dem zu prüfende Substrat zu fokussieren, und Mittel um die Ablenkrichtung des Lichtstrahls zu drehen, so daß dieser eine gewünschte Beziehung zu dem vorherbestimmten Pfad hat;
die Stahlablenkmittel sind entlang der ersten optischen Achse zwischen dem Laser und den optischen Mitteln angeordnet und lenken den Lichtstrahl in oszillierender Weise ab, wobei der Punkt dabei über die Oberfläche des Substrats streicht, von einer Seite des Schnittpunktes der optischen Achse mit dem Substrat zur anderen und in einer Richtung quer zum vorherbestimmten Pfad, während sich das Substrat auf dem vorherbestimmten Pfad bewegt, die Grenzen der Ablenkung des Lichtstrahls von einer Seite des Pfades zur anderen definieren die Breite einer Abtastschwade über einen Behandlungsbereich des Substrates und beinhaltet wenigstens einen Teil eines der besagten Objekte;
lichtdetektierende Mittel, um Änderungen der Intensität des Lichtstrahls zu erfassen, welche durch dessen Durchdringung der Bildpunkte des zu prüfenden Substrates hervorgerufen werden, und dazu korrespondierende Abtastsignale zu erzeugen;
elektronische Mittel, welche die Abtastsignale mit entsprechenden Referenzsignalen vergleichen, wobei zwischen diesen auftretende Differenzen zur Identifikation von Defekten auf dem geprüften Substrat herangezogen werden können;
Mitteln um die Positionen der Defekte auf dem Substrat zu registrieren;
Mittel, welche den Träger anschließend Repositionieren, so daß eine vorhergehend registrierte Position eines ausgewählten Defekts fortwährend von der optischen Achse geschnitten wird;

Oszillatorische Reflektionsmittel, welche entlang der optischen Achse angeordnet sind, um den Lichtstrahl in einer zu der Ablenkung durch die Lichtstrahlablenkmittel orthogonalen Richtung vor und zurück zu lenken, so daß die lichtdetektierenden Mittel fortwährend Anzeigesignale erzeugen, die den ausgewählten Defekt darstellen; und

Anzeigemittel, welche auf die Anzeigesignale ansprechen und eine sichtbare Anzeige der ausgewählten Defektes erzeugen.

3. Ein optisches Prüfsystem zur Prüfung von Substraten, ausgewählt aus der Gruppe von Photomasken, Rasterplatten, Phasenschiebermasken und Halbleiterwafern, bestehend aus:

einem Laser, um einen punktbeleuchtenden Lichtstrahl erzeugt;

optischen Mitteln, die eine erste, optische Achse definieren, entlang welcher der punktbeleuchtende Lichtstrahl geführt wird, mit einem Subsystem mit variabler Vergrößerung, um den Lichtstrahl auf das zu prüfende Substrat zu fokussieren, und Mitteln, um die Ablenkrichtung des Lichtstrahls zu drehen, so daß dieser eine gewünschte Beziehung zu dem vorherbestimmten Pfad hat;

einem Gestell, welches ein zu prüfendes Substrat innerhalb einer von der optischen Achse geschnittenen Prüfebene bewegt, so daß der Schnittpunkt einem schlangenförmigen Pfad über wenigstens einem Teil des Substrats folgt, und mindestens eines der Objekte einschließt;

das Stahlablenkmittel ist entlang der ersten optischen Achse zwischen dem Laser und den optischen Mitteln angeordnet und lenkt den Lichtstrahl in oszillierender Weise von einer Seite des Schnittpunktes der optischen Achse und dem Substrat zur anderen ab, in einer Richtung quer zum vorherbestimmten Pfad, während sich das Substrat auf dem vorherbestimmten Pfad bewegt, wobei die Ablenkung des Lichtstrahls von einer Seite des Pfades zur anderen eine Abtastschwade über den Teil des Substrats definiert;

lichtdetektierende Mittel, um Änderungen der Intensität des Lichtstrahls zu erfassen, welche durch punktförmige, durch den Lichtstrahl beleuchtete Bereiche des zu prüfenden Substrates hervorgerufen werden, und welche diesen entsprechende Abtastsignale zu erzeugen; und

elektronische Mittel, welche die Abtastsignale mit entsprechenden Referenzsignalen vergleichen, wobei auftretende Differenzen zur Identifikation von Defekten auf dem geprüften Substrat herangezogen werden können und die Bereiche der Defekte auf den Substrat registriert werden.

4. Ein optisches Prüfsystem zur Prüfung von Substraten, ausgewählt aus der Gruppe von Photomasken, Rasterplatten, Phasenschiebermasken und Halbleiterwafern, welche eine Vielzahl von als identisch angenommenen strukturierten Objekten aufweist, die in einer geordneten Matrix auf deren Oberfläche angeordnet sind, bestehend aus:

einem Laser, um einen punktbeleuchtenden Lichtstrahl erzeugt;

optische Mittel, die eine erste optische Achse definieren und entlang welcher der punktbeleuchtende Lichtstrahl geführt wird, und Mittel beinhalten, um die Ablenkrichtung des Lichtstrahls zu drehen, so daß dieser die gewünschte Beziehung zu dem vorherbestimmten Pfad hat;

einem Gestell, welches ein zu prüfendes Substrat innerhalb einer von der optischen Achse geschnittenen Prüfebene bewegt, so daß der Schnittpunkt einem schlangenförmigen Pfad über wenigstens einem Teil des Substrats folgt, und mindestens eines der Objekte einschließt;

Stahlablenkmittel, die entlang der ersten optischen Achse zwischen dem Laser und den optischen Mitteln angeordnet sind und den Lichtstrahl in oszillierender Weise von einer Seite des Schnittpunktes der optischen Achse mit dem Substrat zur anderen ablenken, in einer Richtung quer zum vorherbestimmten Pfad, so daß, während sich das Substrat auf dem vorherbestimmten Pfad bewegt, die Ablenkung des Lichtstrahls von einer Seite des Pfades zur anderen eine Abtastschwade über den Teil des Substrats definiert;

lichtdetektierende Mittel, um Änderungen der Intensität des Lichtstrahls zu erfassen, hervorgerufen durch punktförmige, durch den Lichtstrahl beleuchtete Bereiche des zu prüfenden Substrates, und welche dazu korrespondierende Abtastsignale erzeugen;

elektronische Mittel zum Registrieren von ersten Abtastsignalen, die gebildet werden, während die Abtastschwade über die ersten strukturierten Objekte streicht, und zum Vergleich der gespeicherten ersten Abtastsignale mit zweiten Abtastsignalen, die gebildet werden, während die Abtastschwade über einen zweiten Teil der strukturierten Objekte streicht, wobei auftretende Differenzen zur Identifikation von Defekten auf dem geprüften Substrat herangezogen werden können; und

Mittel um die Positionen der Defekten auf dem Substrat zu registrieren.

5. Ein optisches Prüfsystem nach einem der Ansprüche 1-4, worin das Gestell auf eine Bewegung in zwei Freiheitsgraden eingeschränkt ist, und über X-Richtungs- und Y-Richtungssignale angetrieben wird, die von dem elektronischen Mittel erzeugt werden.

6. Ein optisches Prüfsystem nach Anspruch 5, worin das Gestell ein X/Y luftgelagertes Gestell ist, welches durch Linearmotoren angetrieben wird, die durch ein Luftlager getrennte Statoren und Gleitstücke aufweisen, wobei die Statoren derart ausgebildet sind, daß die Luftlager jedes Gleitstückes in mindestens zwei Richtungen vorgespannt werden.

7. Ein optisches Prüfsystem nach einem der Ansprüche 1-4, worin der Laser mit einer vorherbestimmten Wellenlänge gewählt ist, im wesentlichen gleich zur Wellenlänge der Lichtquelle, die später in Verbindung mit dem Substrat bei der Bearbeitung des Wafers benutzt wird.

8. Ein optisches Prüfsystem nach einem der Ansprüche 1-4, worin das optischen Mittel weiterhin Mittel zur Definition einer zweiten optischen Achse aufweist, entlang welcher der Lichtstrahl geführt werden kann, und welches einen Teil gemeinsam mit einem Teil der ersten optischen Achse hat, wobei die optischen Pfadlängen der ersten und zweiten optischen Achse in etwa gleich sind, so daß die zwei Achsen etwa gleiche thermische Abweichungen erfahren, wobei die zweite optische Achse einen schrägen Spiegel aufweist, um den Lichtstrahl entlang der zweiten optischen Achse zurück auf die lichtdetektierenden Mittel zu reflektieren, für einen interferometrischen Vergleich mit dem entlang der ersten optischen Achse reflektierten Lichts des unter Test stehenden Substrats.

9. Ein optisches Prüfsystem nach einem der Ansprüche 1-4, worin das lichtdetektierende Mittel einen ersten Detektor zur Detektion der Intensität des vom Substrat reflektierten Lichtes aufweist, und erste Abtastsignale erzeugt.

10. Ein optisches Prüfsystem nach einem der Ansprüche 1-4, worin das lichtdetektierende Mittel weiterhin einen zweiten Detektor aufweist, der die Intensität des Lichtstrahls, der durch das zu prüfende Substrat hindurchdringt, detektiert und zweite Abtastsignale erzeugt.

11. Ein optisches Prüfsystem nach Anspruch 10, worin das elektronische Mittel die ersten und zweiten Abtastsignale mit ersten und zweiten Referenzsignalen vergleicht, und damit die Existenz und Art jedes gefundenen Defekts bestimmt.

12. Ein optisches Prüfsystem nach einem der Ansprüche 1-4, worin das lichtdetektierende Mittel einen Lichtabstrahl-Detektor aufweist, um die Lichtintensität des Lichtstrahls, der bei der Prüfung durch das Substrat hindurchtritt, zu detektieren und entsprechende Abtastsignale zu erzeugen.

13. Ein optisches Prüfsystem nach einem der Ansprüche 1-4, worin das lichtdetektierende Mittel Mittel zur Überwachung der Intensität des Lichtstrahls aufweist und ein Ausgangssignal erzeugt, welches von dem elektronische Mittel verwendet werden kann, um an den Abtastsignalen Korrekturen aufgrund von Schwankungen der Lichtintensität vorzunehmen.

14. Ein optisches Prüfsystem nach einem der Ansprüche 1-4, worin das Mittel zu Strahlablenkung einen akustisch-optischen Modulator beinhaltet, so daß der Lichtstrahl innerhalb eines relativ kleinen Winkels vor und zurück abgelenkt wird, wobei der Winkel den Faktor darstellt, der die Breite jeder Abtastschwade bestimmt.

15. Ein optisches Prüfsystem nach einem der Ansprüche 1-4, welches weiterhin Hauptdaten aufweist, die für jedes zu prüfende Substrat entsprechende Idealdaten beinhalten, wobei die Daten wahlweise ausgelesen werden, um die Referenzsignale zu erzeugen.

16. Ein optisches Prüfsystem nach einem der Ansprüche 1-4, wobei weiterhin Mittel zum Speichern der Abtastsignale vorhanden sind, und die gespeicherten Signale nacheinander benutzt werden, um die Referenzsignale zu liefern mit denen gerade abgetastete Signale verglichen werden können.

17. Ein optisches Prüfsystem nach einem der Ansprüche 1-4, worin das lichtdetektierende Mittel einen ersten Detektor zum Detektieren des durch das zu prüfende Substrat gestrahlten Lichtes aufweist und einen zweiten Detektor, zum gleichzeitigen Detektieren des von dem zu prüfenden Substrat reflektierten Lichtes, wobei der erste und zweite Detektor jeweils erste und zweite Signale erzeugen, aus welches das elektronische Mittel das Vorhandensein eines Defektes und die Art des detektierten Defektes ermitteln kann.

18. Ein optisches Prüfsystem nach einem der Ansprüche 1-4, wobei weiterhin Mittel vorhanden sind, welche entlang einer zweiten optischen Achse, welche die erste optische Achse schneidet, angeordnet sind, und welche einen Lichtstrahl erzeugen, der mit dem vom zu prüfenden Substrat reflektierten Licht interferiert und einen Interferenzstrahl erzeugt, der von dem lichtdetektierenden Mittel detektiert werden kann, so daß die vom lichtdetektiernden Mittel detektierte Intensität des Interferenzstrahls von dem elektronischen Mittel benutzt werden kann, um Veränderungen in der Höhe des geprüften Oberflächenmaterials über einer bestimmten Fläche des geprüften Substrates zu bestimmen.

19. Ein optisches Prüfsystem nach einem der Ansprüche 1-4, wobei weitere Mittel vorhanden sind, welche eine auto-fokus optische Achse definieren, welche die erste optische Achse schneidet, und Mittel vorhanden sind, um Astigmatismus in den von der Oberfläche des zu prüfenden Substrats reflektierten Strahl zu bringen, und Auto-Fokus-Detektionsmittel, um die Form des astigmatischen Strahl zu messen und daraus den Grad der Fokussierung des Strahls auf dem Substrat zu bestimmen, wobei die Auto-Fokus-Detektionsmittel Korrektursignale zur Eingabe in das elektronische Mittel erzeugen.

20. Ein optisches Prüfsystem nach Anspruch 19, wobei weitere Mittel zur Aufteilung der auto-fokus optischen Achse in einen ersten und einen zweiten Zweig vorhanden sind, welche gegensätzlich polarisierte anamorphische Elemente aufweisen, welche die Form des hindurchtretenden Lichtstrahl verzerren, und worin die Auto-Fokus-Detektionsmittel einen ersten dem ersten Zweig zugeordneten Bildformdetektor und einen zweiten dem zweiten Zweig zugeordneten Bildformdetektor aufweisen, wobei die Ausgänge der Bildformdetektoren von den elektronischen Mitteln benutzt werden, um zu bestimmen, ob der Lichtstrahl auf die Prüfebene fokussiert ist, und falls dieser nicht im Fokus ist, den Grad und die Richtung zu bestimmen in welcher der Strahl nicht fokussiert ist.

21. Ein optisches Prüfsystem nach Anspruch 20, worin der ersten und zweite Bildformdetektor als geeignet ausgerichtete Quadraturdetektoren ausgebildet sind.

22. Ein optisches Prüfsystem nach einem der Ansprüche 1-4, worin das elektronische Mittel die Beträge dieser Abtastsignale mißt, welche vorherbestimmten Gitterpunkten auf der Oberfläche des zu prüfenden Substrates entsprechen, und dann diese Messungen benutzt, um die Oberflächenabmessungen der Oberflächenmerkmale zu vermessen.

23. Ein optisches Prüfsystem nach Anspruch 16, worin das lichtdetektierende Mittel einen ersten Detektor zur Detektion der Intensität des vom Substrat reflektierten Lichtes aufweist und erste Abtastsignale generiert, die damit übereinstimmen.

24. Ein optisches Prüfsystem nach Anspruch 23, worin die lichtdetektierenden Mittel weiterhin einen zweiten Detektor aufweist, der die Intensität des Lichtstrahls, der durch das zu prüfende Substrat hindurchdringt, detektiert und zweite Abtastsignale erzeugt die damit übereinstimmen.

25. Ein optisches Prüfsystem nach Anspruch 24, worin das elektronische Mittel die ersten und zweiten Abtastsignale mit ersten und zweiten Referenzsignalen vergleicht, und damit die Existenz und Art jedes gefundenen Defekts bestimmt.

26. Ein optisches Prüfsystem nach Anspruch 25, worin das lichtdetektierende Mittel Mittel zur Überwachung der Intensität des Lichtstrahls aufweist, und ein Ausgangssignal erzeugt, welches von dem elektronische Mittel verwendet werden kann, um an den Abtastsignalen Korrekturen aufgrund von Schwankungen der Lichtintensität vorzunehmen.

27. Ein optisches Prüfsystem nach Anspruch 26, wobei weitere Mittel vorhanden sind, welche eine auto-fokus optische Achse definieren, welche die erste optische Achse schneidet, und Mittel vorhanden sind, um Astigmatismus in den von der Oberfläche des zu prüfenden Substrats reflektierten Strahl zu bringen, und Auto-Fokus-Detektionsmittel, um die Form des astigmatischen Strahl zu messen und daraus den Grad der Fokussierung des Strahls auf dem Substrat zu bestimmen, wobei die Auto-Fokus-Detektionsmittel Korrektursignale zur Eingabe in das elektronische Mittel erzeugen.

28. Ein optisches Prüfsystem nach Anspruch 27, wobei weitere Mittel zur Aufteilung der auto-fokus optischen Achse in einen ersten und einen zweiten Zweig vorhanden sind, welche gegensätzlich polarisierte anamorphische Elemente aufweisen, welche die Form des hindurchtretenden Lichtstrahl verzerren, und worin die Auto-Fokus-Detektionsmittel einen ersten dem ersten Zweig zugeordneten Bildformdetektor und einen zweiten dem zweiten Zweig zugeordneten Bildformdetektor aufweisen, wobei die Ausgänge der Bildformdetektoren von den elektronischen Mitteln benutzt werden, um zu bestimmen, ob der Lichtstrahl auf die Prüfebene fokussiert ist, und falls dieser nicht im Fokus ist, den Grad und die Richtung zu bestimmen in welcher der Strahl nicht fokussiert ist.

29. Ein optisches Prüfsystem nach Anspruch 28, worin der ersten und zweite Bildformdetektor als geeignet ausgerichtete Quadraturdetektoren ausgebildet sind.

30. Ein optisches Prüfsystem nach Anspruch 29, worin das elektronische Mittel die Beträge der Abtastsignale mißt, welche vorherbestimmten Gitterpunkten auf der Oberfläche des zu prüfenden Substrates entsprechen, und dann diese Messungen benutzt, um die Oberflächenabmessungen der Oberflächenmerkmale zu vermessen.

31. Ein optisches Prüfsystem nach Anspruch 30, worin das Gestell ein X/Y luftgelagertes Gestell ist, welches durch Linearmotoren angetrieben wird, die durch ein Luftlager getrennte Statoren und Gleitstücke aufweisen, wobei die Statoren derart ausgebildet sind, daß die Luftlager jedes Gleitstückes in mindestens zwei Richtungen vorgespannt werden.

32. Ein optisches Prüfsystem nach Anspruch 31, worin das optische Mittel Mittel aufweist, welche benutzt werden können, um die Richtung der Ablenkung des Lichtstrahls zu rotieren, so daß er eine gewünschte Beziehung zu dem vorgegebenen Pfad aufweist.

33. Ein optisches Prüfsystem nach Anspruch 15, worin das lichtdetektierende Mittel einen ersten Detektor zur Detektion der Intensität des vom Substrat reflektierten Lichtes aufweist und erste Abtastsignale generiert, die damit übereinstimmen.

34. Ein optisches Prüfsystem nach Anspruch 33, worin das lichtdetektierende Mittel weiterhin einen zweiten Detektor aufweist, der die Intensität des Lichtstrahls, der durch das zu prüfende Substrat hindurchdringt, detektiert und zweite Abtastsignale erzeugt, die damit übereinstimmen.

35. Ein optisches Prüfsystem nach Anspruch 34, worin das elektronische Mittel die ersten und zweiten Abtastsignale mit ersten und zweiten Referenzsignalen vergleicht, und damit die Existenz und Art jedes gefundenen Defekts bestimmt.

36. Ein optisches Prüfsystem nach Anspruch 35, wobei weitere Mittel vorhanden sind, welche eine auto-fokus optische Achse definieren, welche die erste optische Achse schneidet, und Mittel vorhanden sind, um Astigmatismus in den von der Oberfläche des zu prüfenden Substrats reflektierten Strahl zu bringen, und Auto-Fokus-Detektionsmittel, um die Form des astigmatischen Strahl zu messen und daraus den Grad der Fokussierung des Strahls auf dem Substrat zu bestimmen, wobei die Auto-Fokus-Detektionsmittel Korrektursignale zur Eingabe in das elektronische Mittel erzeugen.

37. Ein optisches Prüfsystem nach Anspruch 36, wobei weitere Mittel zur Aufteilung der auto-fokus optischen Achse in einen ersten und einen zweiten Zweig vorhanden sind, welche gegensätzlich polarisierte anamorphische Elemente aufweisen, welche die Form des hindurchtretenden Lichtstrahl verzerren, und worin die Auto-Fokus-Detektionsmittel einen ersten dem ersten Zweig zugeordneten Bildformdetektor und einen zweiten dem zweiten Zweig zugeordneten Bildformdetektor aufweisen, wobei die Ausgänge der Bildformdetektoren von den elektronischen Mitteln benutzt werden, um zu bestimmen, ob der Lichtstrahl auf die Prüfebene fokussiert ist, und falls dieser nicht im Fokus ist, den Grad und die Richtung zu bestimmen in welcher der Strahl nicht fokussiert ist.

38. Ein optisches Prüfsystem nach Anspruch 37, worin das elektronische Mittel die Beträge dieser Abtastsignale mißt, welche vorherbestimmten Gitterpunkten auf der Oberfläche des zu prüfenden Substrates entsprechen, und dann diese Messungen benutzt, um die Oberflächenabmessungen der Oberflächenmerkmale zu vermessen.

39. Ein optisches Prüfsystem nach Anspruch 38, worin das Gestell ein X/Y luftgelagertes Gestell ist, welches durch Linearmotoren angetrieben wird, die durch ein Luftlager getrennte Statoren und Gleitstücke aufweisen, wobei die Statoren derart ausgebildet sind, daß die Luftlager jedes Gleitstückes in mindestens zwei Richtungen vorgespannt werden.

40. Ein optisches Prüfsystem nach einem der Ansprüche 1-4, worin das lichtdetektierende Mittel einen Durchlassdetektor aufweist, der entlang der ersten optischen Achse an der Seite der Prüfebene gegenüber der Seite des Lasers angeordnet ist, und das übertragene, durch das zu prüfende Substrat hindurchdringende Licht detektiert, wobei das optische Mittel weiter Mittel beinhaltet, welche eine zweite optische Achse definieren entlang welcher der Lichtstrahl entlanggeführt werden kann, wobei die zweite optische Achse das zu prüfende Substrat nicht schneidet aber wenigstens ein Teil davon Teil der ersten optische Achse ist und den Durchlassdetektor schneidet, wobei ein interferometrischer Vergleich zwischen dem Lichtstrahl und dem abgestrahlten Licht durchgeführt werden kann.

41. Ein optisches Prüfsystem nach Anspruch 40, worin das optische Mittel auch Mittel aufweist, welche eine dritte optische Achse definieren entlang welcher der Lichtstrahl geführt werden kann, und welche einen Teil mit einem teil der ersten optischen Achse gemeinsam hat, wobei die optischen Pfadlängen der zweiten und dritten optischen Achse im wesentlichen gleich sind, so daß die Achsen im wesentlichen den gleichen thermischen Veränderungen ausgesetzt sind, wobei die dritte optische Achse einen schräggestellten Spiegel aufweist, um den räumlich verschobenen Lichtstrahl räumlich zu verschieben und zurück entlang der dritten optischen Achse und auf den Reflektionsdetektor zu reflektieren, für einen interferometrischen Vergleich mit dem entlang der ersten optischen Achse reflektierten Licht von dem zu prüfenden Substrat.

42. Ein optisches Prüfsystem nach Anspruch 10, wobei weiterhin Schaltmittel vorhanden sind, die auf dieses erste und zweite Abtastsignal ansprechen, und torgesteuerte Signale erzeugt zur Eingabe für das elektronische Mittel, um Defekte auf dem geprüften Substrat anzuzeigen, als Funktion des Phasenfehlers zwischen dem von der Oberfläche des Substrats reflektierten Lichts und dem durch das geprüfte Substrat hindurchtretende Licht.

43. Ein optisches Prüfsystem nach Anspruch 42, worin die Schaltmittel beinhalten:

einen analogen Phasendetektor zum Vergleich des ersten Abtastsignals mit einem Referenzsignal, und ein zu der Phasendifferenz proportionales Analogsignal, welches proportional zur Phasendifferenz zwischen diesen ist, zu erzeugen,
Mittel, um das Analogsignal in ein digitales Signal umzuwandeln, und
ein Codiermittel, gesteuert von dem zweiten Abtastsignal, welches die torgesteuerten Signale erzeugt.

44. Ein Verfahren zum Prüfen von Substraten ausgewählt aus der Gruppe bestehende aus Photomasken, Rasterplatten, Phasenschiebermasken und Halbleiterwafern, welches folgende Schritte beinhaltet:

Transportieren eines zu prüfenden Substrates entlang eines vorherbestimmten Pfades innerhalb einer Prüfebene;
Richten eines Lichtstrahls entlang einer ersten optischen Achse, welche die Prüfebene schneidet, und fokussieren des Lichtstrahls derart, daß er einen Punkt von bestimmter Größe auf den zu prüfenden Substrat beleuchtet;
lenken des Lichtstrahls in oszillierender Weise von einer Seite des Schnittpunktes der optischen Achse mit dem Substrat zur anderen, mit Mitteln zum Rotieren der Ablenkrichtung, wobei die Ablenkung in einer Richtung quer zum Vorherbestimmten Pfad erfolgt, wobei Untersuchungsgebiete des Substrats, welche mindestens eines der Objekte beinhalten, in Form von Schwaden abgetastet werden, deren Breite durch die Ablenkungsgrenzen definiert werden; Detektion von Änderungen der Intensität des Lichtstrahls, hervorgerufen durch dessen Schnitt mit Punktbereichen des geprüften Substrates, und erzeugen von entsprechenden Abtastsignalen;

Abfragen der Abtastsignale um Punktabtastsignale zu erzeugen;
Vergleichen der Punktabtastsignale mit entsprechenden Referenzsignalen und Benutzten der bestehenden Unterschiede, um Defekte im geprüften Substrat zu identifizieren.

45. Ein Verfahren zum Prüfen von Substraten ausgewählt aus der Gruppe bestehende aus Photomasken, Rasterplatten, Phasenschiebermasken und Halbleiterwafern, welches folgende Schritte beinhaltet:

Transportieren eines zu Prüfenden Substrates entlang eines vorherbestimmten Pfades innerhalb einer Prüfebene;
Vorsehen eines punktbeleuchtenden Lichtstrahls;
Vorsehen eines optischen Mittels, welches eine erste die Prüfebene schneidende optische Achse definiert, und führen dieses punktbeleuchtenden Lichtstrahls entlang der optischen Achse, und ausgewähltes Fokussieren des Lichtstrahls, um einen Punkt auf dem zu prüfenden Substrat zu beleuchten, wobei die Punktgröße wenigstens eine Abmessung eines Bildpunktes auf dem Substrates bestimmt;
lenken des Lichtstrahls in oszillierender Weise von einer Seite des Schnittpunktes der optischen Achse mit dem Substrat zur anderen und in Richtung quer zu dem vorherbestimmten Pfad, während das Substrat entlang des vorherbestimmten Pfads bewegt wird, und der Lichtstrahl in seiner Ablenkrichtung rotiert wird, so daß der Lichtstrahl eine gewünschte Beziehung zu dem vorherbestimmten Pfad aufweist, die Grenzen der Ablenkung des Strahls von einer Seite zu Anderen definieren die Breite einer Abtastschwade über einen Untersuchungsbereich des Substrates, und wenigstens einen Teil der Objekte einschließt; Detektieren von Änderungen in der Intensität des Lichtstrahls hervorgerufen durch dessen Durchschneidung der Bildpunktbereiche des geprüften Substrates, und Erzeugen von entsprechenden Abtastsignalen;
Abfragen der Abtastsignale um Punktabtastsignale zu erzeugen; und
Vergleichen der Punktabtastsignale mit entsprechenden Referenzsignalen und Benutzten der bestehenden Unterschiede, um Defekte im geprüften Substrat zu identifizieren.

46. Ein Verfahren zum Prüfen von Substraten, wie Photomasken, Rasterplatten, Phasenschiebermasken und Halbleiterwafern, welches folgende Schritte aufweist:

Transportieren eines zu prüfenden Substrates entlang eines vorherbestimmten Pfades innerhalb einer Prüfebene;

Benutzung eines Lasers, um einen punktbeleuchtenden Lichtstrahl zu erzeugen;

Vorsehen eines optischen Mittels, welches eine erste optische Achse definiert, welche die Prüfebene schneidet und entlang welcher der punktbeleuchtende Lichtstrahl geführt wird, wobei das optische Mittel dazu verwendet wird, um den Lichtstrahl zu fokussieren und einen Punkt auf dem zu prüfenden Substrat zu beleuchten, wobei die Punktgröße wenigstens eine Dimension eines Bildpunktes des Substrates definiert;

Ablenken des Lichtstrahls in oszillierender Weise über die Oberfläche des Substrates, von einer Seite des Schnittpunkts der optischen Achse mit dem Substrat zur anderen und in einer Richtung quer zum vorherbestimmten Pfad, während das Substrat entlang des vorherbestimmten Pfades bewegt wird, und der Lichtstrahl in Richtung seiner Ablenkung rotiert wird, so daß der Lichtstrahl eine gewünschte Beziehung zum vorherbestimmten Pfad hat, wobei die Grenzen der Ablenkung des Lichtstrahls von einer Seite des Pfades zur anderen die Breite einer Abtastschwade über die Behandlungsflächen des Substrats definieren, und wenigstens einen Teil der Objekte einschließt;

Detektieren von Änderungen in der Intensität des Lichtstrahls, hervorgerufen durch dessen Schnitt mit Bildpunktbereichen des geprüften Substrats und Erzeugen von entsprechenden Abtastsignalen;

Vergleichen der Abtastsignale mit entsprechenden Referenzsignalen und Benutzen von auftretenden Differenzen, um Defekte auf dem geprüften Substrat zu identifizieren;

Registrieren der Orte der Defekte auf dem Substrat;

infolgedessen veranlassen des Gestells zum Repositionieren des geprüften Substrats, so daß der vorhergehend registrierte Ort eines ausgewählten Defekts fortwährend von der optischen Achse geschnitten wird;

Bewegen des Lichtstahls vor und zurück in einer Richtung orthogonal zur Ablenkung, hervorgerufen durch die Strahl-Ablenkmittel, um so das lichtdetektierende Mittel zu veranlassen fortwährend Anzeigesignale zu erzeugen, stellvertretende für den ausgewählten Defekt; und

Benutzen der Anzeigesignale, um eine visuelle Darstellung des ausgewählten Defekts zu erzeugen.

47. Ein Verfahren zum Prüfen von Substraten ausgewählt aus der Gruppe bestehend aus Photomasken, Rasterplatten, Phasenschiebermasken und Halbleiterwafern, welches folgende Schritte beinhaltet:

Benutzen eines Lasers, um einen punktbeleuchtenden Lichtstrahl zu erzeugen;

Vorsehen von optischen Mitteln, welche eine erste optische Achse definieren, entlang welcher der punktbeleuchtende Lichtstrahl geführt wird;

Bewegen eines zu prüfenden Substrats innerhalb einer Prüfebene, welche von der optische Achse geschnitten wird, so daß der Schnittpunkt eine schlangenförmige Bahn über wenigstens einen Teil des Substrates beschreibt, und wenigstens eines der Objekte einschließt;

Ablenken des Lichtstrahls in oszillierender Weise von einer Seite des Schnittes der optischen Achse mit dem Substrat zur anderen, durch Mittel zum Rotieren der Ablenkrichtung, wobei die Ablenkung in einer Richtung quer zu dem vorherbestimmten Pfad erfolgt, so daß, während das Substrat entlang des vorherbestimmten Pfades bewegt wird, die Ablenkung des Lichtstrahls von einer Seite des Pfades zur anderen eine Abtastschwade über einen Teil des Substrates definiert;

Detektieren von Änderungen der Intensität des Lichtstrahls hervorgerufen durch die vom Lichtstrahl beleuchteten Bildpunktbereiche des geprüften Substrates und Erzeugen von diesen entsprechenden Abtastsignalen; und

Vergleichen der Abtastsignale mit entsprechenden Referenzsignalen, wobei Differenzen zwischen diesen benutzt werden können, um Defekte auf dem geprüften Substrat zu identifizieren und Registrieren der Orte der Defekte auf dem Substrat.

48. Verfahren zum Prüfen von Substraten, ausgewählt aus der Gruppe von Photomasken, Rasterplatten, Phasenschiebermasken und Halbleiterwafern, welche eine Vielzahl von als identisch angenommenen strukturierten Objekten aufweist, die in einer geordneten Matrix auf deren Oberfläche angeordnet sind, welches folgende Schritten aufweist:

Benutzen eines Lasers, um einen punktbeleuchtenden Lichtstrahl zu erzeugen;

Benutzen eines optischen Mittels, um eine erste optische Achse zu definieren, entlang welcher der punktbeleuchtende Lichtstrahl geführt wird;

Benutzen eines Gestells, um das zu prüfender Substrat innerhalb der von der optischen Achse geschnittenen Prüfebene zu bewegen, so daß der Schnittpunkt eine schlangenlinienförmige Bahn auf wenigstens einem Teil des Substrates beschreibt, und wenigstens eines der Objekte einschließt;

Ablenken des Lichtstrahls in oszillierender Weise von einer Seite des Schnittpunktes der optischen Achse mit dem Substrat zur anderen durch Mittel zum Rotieren der Richtung der Ablenkung, wobei die Ablenkung in einer Richtung quer zum vorherbestimmten Pfad erfolgt, so daß, während das Substrat entlang des vorherbestimmten Pfades bewegt wird, die Ablenkung des Lichtstrahls von einer Seite des Pfades zur anderen eine Abtastschwade über einen Teil des Substrates definiert;

Rotieren des abgelenkten Lichtstrahls, so daß er eine gewünschte Beziehung zu dem vorherbestimmten Pfad aufweist;

Detektieren von Änderungen der Intensität des Lichtstrahls, hervorgerufen von Bildbunktbereichen des geprüften Substrates, beleuchtet von dem Lichtstrahl und Erzeugen von entsprechenden Abtastsignalen;

Speichern von ersten Abtastsignalen, erzeugt, während die Abtastschwade über einen ersten Teil der matrixhaften Objekte streicht und Vergleichen der gespeicherten ersten Abtastsignale mit zweiten Abtastsignalen, erzeugt, während die Abtastschwade über einen zweiten Teil der matrixhaften Objekte streicht, so daß Differenzen zwischen diesen benutzt werden können, um Defekte auf dem geprüften Substrat zu identifizieren; und

Registrieren der Orte der Defekte auf dem Substrat.

## Revendications

1. Système de contrôle optique pour l'examen de substrats choisis dans le groupe constitué des masques de photogravure, des réticules, des masques de déphasage et des plaquettes en semiconducteur, comprenant:

des moyens formant platine pour transporter un substrat à examiner le long d'un trajet prédéterminé, dans un plan d'examen;
des moyens formant laser pour fournir un faisceau de lumière éclairant un élément d'image;
des moyens optiques définissant un premier axe optique qui coupe ledit plan d'examen et le long duquel ledit faisceau de lumière éclairant un élément d'image est destiné à être envoyé, lesdits moyens optiques comportant un sous-système de grossissement variable destiné à focaliser ledit faisceau de lumière sur le substrat à examiner, et des moyens pour faire pivoter la direction de déflexion dudit faisceau de lumière afin qu'il soit dans une relation mutuelle voulue par rapport audit trajet prédéterminé;

des moyens de déflexion de faisceau disposés le long dudit premier axe optique, entre lesdits moyens formant laser et lesdits moyens optiques, et intervenant pour dévier ledit faisceau de lumière sur un mode oscillatoire, ce qui amène ledit point lumineux à balayer transversalement la surface dudit substrat, d'un côté de l'intersection dudit axe optique avec ledit substrat à un autre et dans une direction transversale audit trajet prédéterminé, pendant que le substrat est transporté le long dudit trajet prédéterminé, les limites de déflexion dudit faisceau de lumière, d'un côté dudit trajet à l'autre, définissant la largeur d'une bande de balayage sur une zone intéressée du substrat, qui comporte au moins une partie de l'un desdits objets;
des moyens de détection de lumière pour détecter des variations de l'intensité dudit faisceau de lumière, induites par sa rencontre avec le substrat examiné, et agissant pour former des signaux de balayage correspondant à ces variations, lesdits moyens de détection de lumière comportant des moyens d'échantillonnage pour échantillonner lesdits signaux de balayage afin de produire des signaux d'échantillon d'élément d'image; et
des moyens électroniques pour comparer lesdits signaux d'échantillon d'élément d'image à des signaux de référence correspondants, les différences entre eux pouvant être utilisées pour identifier des défauts dans le substrat examiné.

2. Système de contrôle optique pour l'examen de substrats, tels que des masques de photogravure, des réticules, des masques de déphasage et des plaquettes en semiconducteur, comprenant:

des moyens formant platine pour transporter un substrat à examiner le long d'un trajet prédéterminé, dans un plan d'examen;
des moyens formant laser pour fournir un faisceau de lumière éclairant un élément d'image;
des moyens optiques définissant un premier axe optique qui coupe ledit plan d'examen et le long duquel ledit faisceau de lumière éclairant un élément d'image est destiné à être envoyé, lesdits moyens optiques intervenant pour focaliser ledit faisceau de lumière afin qu'il projette un point lumineux sur le substrat à examiner, la taille du point lumineux déterminant au moins une dimension d'un élément d'image du substrat, et pour faire pivoter la direction de déflexion dudit faisceau de lumière afin qu'il soit dans une relation mutuelle voulue par rapport audit trajet prédéterminé;
des moyens de déflexion de faisceau disposés le long dudit premier axe optique, entre lesdits moyens formant laser et lesdits moyens optiques, et intervenant pour dévier ledit faisceau de lumière sur un mode oscillatoire, ce qui amène ledit point lumineux à balayer transversalement la surface dudit substrat, d'un côté de l'intersection dudit axe optique avec ledit substrat à un autre et dans une direction transversale audit trajet prédéterminé, pendant que le substrat est transporté le long dudit trajet prédéterminé, les limites de déflexion dudit faisceau de lumière d'un côté dudit trajet à l'autre définissant la largeur d'une bande de balayage sur des zones intéressées du substrat, qui comportent au moins une partie de l'un desdits objets;

des moyens de détection de lumière pour détecter des variations de l'intensité dudit faisceau de lumière, induites par sa rencontre avec des zones d'éléments d'image du substrat examiné, et agissant pour former des signaux de balayage correspondant à ces variations;

des moyens électroniques pour comparer lesdits signaux de balayage à des signaux de référence correspondants, les différences entre eux pouvant être utilisées pour identifier des défauts dans le substrat examiné;

des moyens pour enregistrer les emplacements, sur le substrat, desdits défauts;

des moyens pour contraindre ensuite lesdits moyens formant platine à repositionner le substrat examiné d'une façon telle, qu'un emplacement précédemment enregistré d'un défaut sélectionné soit coupé continuellement par ledit axe optique;

des moyens de réflexion oscillatoires, disposés le long dudit axe optique, pour produire un balayage dudit faisceau de lumière en va-et-vient dans une direction orthogonale à la déflexion provoquée par lesdits moyens de déflexion de faisceau, afin d'amener lesdits moyens de détection de lumière à engendrer en continu des signaux d'affichage représentatifs du défaut sélectionné; et

des moyens d'affichage sensibles auxdits signaux d'affichage et agissant pour réaliser un affichage visuel du défaut sélectionné.

3. Système de contrôle optique pour l'examen de substrats choisis dans le groupe constitué des masques de photogravure, des réticules, des masques de déphasage et des plaquettes en semiconducteur, comprenant:

des moyens formant laser pour fournir un faisceau de lumière éclairant un élément d'image;
des moyens optiques définissant un premier axe optique le long duquel ledit faisceau de lumière éclairant un élément d'image est destiné à être envoyé, et comportant un moyen pour faire pivoter la direction de déflexion dudit faisceau de lumière afin qu'il soit dans une relation mutuelle voulue par rapport audit trajet prédéterminé;

des moyens formant platine pour déplacer un substrat à examiner dans un plan d'examen que coupe ledit axe optique, d'une façon telle que le point d'intersection suive un trajet sinueux sur au moins une partie du substrat, qui comporte au moins l'un des objets;

des moyens de déflexion de faisceau disposés le long dudit premier axe optique, entre lesdits moyens formant laser et lesdits moyens optiques, et intervenant pour dévier ledit faisceau de lumière sur un mode oscillatoire, d'un côté de l'intersection dudit axe optique avec ledit substrat à un autre et dans une direction transversale audit trajet prédéterminé, d'une façon telle que, pendant que le substrat est transporté le long dudit trajet prédéterminé, la déflexion dudit faisceau de lumière, d'un côté dudit trajet à l'autre, définisse une bande de balayage sur la partie du substrat;

des moyens de détection de lumière pour détecter des variations de l'intensité dudit faisceau de lumière, induites par des zones d'éléments d'image du substrat examiné, éclairées par ledit faisceau de lumière, et agissant pour former des signaux de balayage correspondant à ces variations; et

des moyens électroniques destinés à comparer lesdits signaux de balayage à des signaux de référence correspondants, les différences entre eux pouvant être utilisées pour identifier des défauts dans le substrat examiné, et à enregistrer l'emplacement desdits défauts sur ledit substrat.

4. Système de contrôle optique pour l'examen de substrats choisis dans le groupe constitué des masques de photogravure, des réticules, des masques de déphasage et des plaquettes en semiconducteur, comportant une multiplicité d'objets dessinés en motif, supposés être identiques et disposés selon un arrangement ordonné sur l'une de leurs surfaces, comprenant:

des moyens formant laser pour fournir un faisceau de lumière éclairant un élément d'image;
des moyens optiques définissant un premier axe optique le long duquel ledit faisceau de lumière éclairant un élément d'image est destiné à être envoyé, et comportant un moyen pour faire pivoter la direction de déflexion dudit faisceau de lumière afin qu'il soit dans une relation mutuelle voulue par rapport audit trajet prédéterminé;

des moyens formant platine pour déplacer un substrat à examiner dans un plan d'examen, que coupe ledit axe optique, d'une façon telle que le point d'intersection suive un trajet sinueux sur au moins une partie du substrat, qui comporte au moins l'un des objets;

des moyens de déflexion de faisceau disposés le long dudit premier axe optique, entre lesdits moyens formant laser et lesdits moyens optiques, et intervenant pour dévier ledit faisceau de lumière sur un mode oscillatoire, d'un côté de l'intersection dudit axe optique avec ledit substrat à un autre et dans une direction transversale audit trajet prédéterminé, d'une façon telle que, pendant que le substrat est transporté le long dudit trajet prédéterminé, la déflexion dudit faisceau de lumière, d'un côté dudit trajet à l'autre, définisse une bande de balayage sur la partie du substrat;

des moyens de détection de lumière pour détecter des variations de l'intensité dudit faisceau de lumière, induites par des zones d'éléments d'image du substrat examiné, éclairées par ledit faisceau de lumière, et agissant pour former des signaux de balayage correspondant à ces variations;

des moyens électroniques pour mémoriser des premiers signaux de balayage, formés au moment où ladite bande de balayage passe sur un premier objet dessiné en motif, et pour comparer les premiers signaux de balayage mémorisés à des seconds signaux de balayage formés au moment où la bande de balayage passe sur un second objet dessiné en motif, les différences entre eux pouvant être utilisées pour identifier des défauts dans le substrat examiné; et

des moyens pour enregistrer les emplacements desdits défauts sur ledit substrat.

5. Système de contrôle optique tel qu'exposé dans l'une quelconque des revendications 1 à 4, dans lequel lesdits moyens formant platine sont restreints dans leur déplacement à pas plus de deux degrés de liberté, et sont attaqués par des signaux d'entrée pour la direction x et pour la direction y, engendrés par lesdits moyens électroniques.

6. Système de contrôle optique tel qu'exposé dans la revendication 5, dans lequel lesdits moyens formant platine sont constitués par une platine à paliers à air X-Y, entraînée par des moteurs linéaires comprenant des stators et des coulisseaux séparés par des moyens formant paliers à air, les stators étant dotés d'une configuration leur permettant de précharger les paliers à air de chaque coulisseau dans au moins deux directions.

7. Système de contrôle optique tel qu'exposé dans l'une quelconque des revendications 1 à 4, dans lequel lesdits moyens formant laser sont choisis possédant une longueur d'onde prédéterminée sensiblement identique à la longueur d'onde d'une source de lumière appelée à être utilisée ultérieurement en liaison avec le substrat examiné, au cours du traitement de la plaquette.

8. Système de contrôle optique tel qu'exposé dans l'une quelconque des revendications 1 à 4, dans lequel lesdits moyens optiques comportent également un moyen définissant un deuxième axe optique, le long duquel ledit faisceau de lumière peut être envoyé, et dont une partie est commune avec une partie dudit premier axe optique, les longueurs de trajet optique desdits premier et deuxième axes optiques étant sensiblement égales de sorte que les deux axes subissent des variations thermiques sensiblement identiques, ledit deuxième axe optique comprenant un miroir incliné destiné à réfléchir le faisceau de lumière en le renvoyant le long dudit deuxième axe optique et sur lesdits moyens de détection de lumière, en vue d'une comparaison interférométrique avec la lumière réfléchie le long dudit premier axe optique par le substrat soumis au test.

9. Système de contrôle optique tel qu'exposé dans l'une quelconque des revendications 1 à 4, dans lequel lesdits moyens de détection de lumière comportent un premier détecteur destiné à détecter l'intensité de la lumière réfléchie par ledit substrat et à engendrer des premiers signaux de balayage.

10. Système de contrôle optique tel qu'exposé dans l'une quelconque des revendications 1 à 4, dans lequel lesdits moyens de détection de lumière comportent, en outre, un second détecteur destiné à détecter l'intensité de la lumière qui provient dudit faisceau traversant le substrat sous examen, et à engendrer des seconds signaux de balayage.

11. Système de contrôle optique tel qu'exposé dans la revendication 10, dans lequel lesdits moyens électroniques comparent lesdits premiers et seconds signaux de balayage à des premiers et seconds signaux de référence, et déterminent à la fois la présence et la nature de tout défaut rencontré.

12. Système de contrôle optique tel qu'exposé dans l'une quelconque des revendications 1 à 4, dans lequel lesdits moyens de détection de lumière comportent un détecteur de lumière transmise, destiné à détecter l'intensité de la lumière qui provient dudit faisceau de lumière traversant le substrat sous examen, et à engendrer des signaux de balayage correspondants.

13. Système de contrôle optique tel qu'exposé dans l'une quelconque des revendications 1 à 4, dans lequel lesdits moyens de détection de lumière comportent des moyens pour surveiller l'intensité dudit faisceau de lumière et engendrer un signal de sortie qui peut être utilisé par lesdits moyens électroniques pour réaliser une correction, fonction de la variation d'intensité du faisceau, sur lesdits signaux de balayage.

14. Système de contrôle optique tel qu'exposé dans l'une quelconque des revendications 1 à 4, dans lequel lesdits moyens de déflexion de faisceau comportent un modulateur acousto-optique destiné à soumettre ledit faisceau de lumière à une déflexion en va-et-vient sur un angle relativement petit, ledit angle étant le facteur qui détermine la largeur de chaque bande de balayage.

15. Système de contrôle optique tel qu'exposé dans l'une quelconque des revendications 1 à 4, et comprenant, en outre, des moyens formant banque de données qui contiennent des données idéales correspondant au substrat sous examen, lesdites données étant sélectivement extraites par lecture pour produire lesdits signaux de référence.

16. Système de contrôle optique tel qu'exposé dans l'une quelconque des revendications 1 à 4, et comprenant, en outre, des moyens pour mémoriser lesdits signaux de balayage, les signaux mémorisés étant utilisés par la suite pour fournir lesdits signaux de référence auxquels les signaux balayés à l'instant considéré peuvent être comparés.

17. Système de contrôle optique tel qu'exposé dans l'une quelconque des revendications 1 à 4, dans lequel lesdits moyens de détection de lumière comportent un premier détecteur destiné à détecter la lumière transmise à travers le substrat en cours d'examen, et un second détecteur destiné à détecter simultanément la lumière réfléchie par le substrat en cours d'examen, lesdits premier et second détecteurs engendrant respectivement des premiers et seconds signaux à partir desquels lesdits moyens électroniques peuvent déterminer à la fois la présence d'un défaut et la nature du défaut détecté.

18. Système de contrôle optique tel qu'exposé dans l'une quelconque des revendications 1 à 4 et comprenant, en outre, des moyens qui sont disposés le long d'un deuxième axe optique coupant ledit premier axe optique et qui interviennent pour engendrer un faisceau de lumière destiné à interférer avec la lumière réfléchie par le substrat sous examen, afin de produire un faisceau d'interférence destiné à être détecté par lesdits moyens de détection de lumière, de telle sorte que l'intensité du faisceau d'interférence, détecté par lesdits moyens de détection de lumière, puisse être utilisée par lesdits moyens électroniques afin qu'ils déterminent des variations de la hauteur du matériau de surface examiné, au-dessus d'une surface particulière sur le substrat examiné.

19. Système de contrôle optique tel qu'exposé dans l'une quelconque des revendications 1 à 4 et comprenant, en outre, des moyens définissant un axe optique d'auto-focalisation, qui coupe ledit premier axe optique, et comportant un moyen destiné à introduire un astigmatisme dans le faisceau réfléchi par la surface du substrat examiné, ainsi que des moyens de détection d'auto-focalisation pour mesurer la forme du faisceau astigmatisé et déterminer, à partir de celle-ci, le degré de focalisation du faisceau sur le substrat, lesdits moyens de détection d'auto-focalisation engendrant des signaux de correction destinés à être appliqués à l'entrée desdits moyens électroniques.

20. Système de contrôle optique tel qu'exposé dans la revendication 19 et comprenant, en outre, des moyens pour scinder ledit axe optique d'auto-focalisation en des première et seconde branches ayant des éléments anamorphes à polarisations opposées, qui imposent une distorsion à la forme du faisceau de lumière envoyé à travers eux, et dans lequel lesdits moyens de détection d'auto-focalisation comportent un premier détecteur de forme d'image associé à ladite première branche et un second détecteur de forme d'image associé à ladite seconde branche, les signaux de sortie desdits détecteurs de forme d'image étant utilisés par lesdits moyens électroniques pour déterminer si ledit faisceau de lumière est focalisé sur ledit plan d'examen et, s'il n'est pas focalisé, pour déterminer le degré et la direction selon lesquels le faisceau s'écarte de la focalisation.

21. Système de contrôle optique tel qu'exposé dans la revendication 20, dans lequel lesdits premier et second détecteurs de forme d'image sont des détecteurs de composantes en quadrature, convenablement orientés.

22. Système de contrôle optique tel qu'exposé dans l'une quelconque des revendications 1 à 4, dans lequel lesdits moyens électroniques mesurent les amplitudes desdits signaux de balayage correspondant à des points de grille prédéterminés sur la surface du substrat sous examen, puis utilisent ces mesures pour déterminer les dimensions de la surface de détails du substrat.

23. Système de contrôle optique tel qu'exposé dans la revendication 16, dans lequel lesdits moyens de détection de lumière comportent un premier détecteur destiné à détecter l'intensité de la lumière réfléchie par le substrat sous examen, et à engendrer des premiers signaux de balayage proportionnés à cette intensité.

24. Système de contrôle optique tel qu'exposé dans la revendication 23, dans lequel lesdits moyens de détection de lumière comportent, en outre, un second détecteur destiné à détecter l'intensité de la lumière provenant dudit faisceau traversant le substrat sous examen, et à engendrer des seconds signaux de balayage proportionnés à cette intensité.

25. Système de contrôle optique tel qu'exposé dans la revendication 24, dans lequel lesdits moyens électroniques comparent lesdits premiers et seconds signaux de balayage à des premiers et seconds signaux de référence correspondants et déterminent à la fois la présence et la nature de tout défaut rencontré.

26. Système de contrôle optique tel qu'exposé dans la revendication 25, dans lequel lesdits moyens de détection de lumière comportent un moyen pour surveiller l'intensité dudit faisceau de lumière et engendrer un signal de sortie qui peut être utilisé par lesdits moyens électroniques pour réaliser une correction, fonction de la variation d'intensité du faisceau, sur lesdits signaux de balayage.

27. Système de contrôle optique tel qu'exposé dans la revendication 26 et comprenant, en outre, des moyens définissant un axe optique d'auto-focalisation, qui coupe ledit premier axe optique, et comportant un moyen pour introduire un astigmatisme dans le faisceau réfléchi par la surface du substrat examiné, ainsi que des moyens de détection d'auto-focalisation pour mesurer la forme du faisceau astigmatisé et déterminer, à partir de celle-ci, le degré de focalisation du faisceau sur le substrat, lesdits moyens de détection d'auto-focalisation engendrant des signaux de correction destinés à être appliqués à l'entrée desdits moyens électroniques.

28. Système de contrôle optique tel qu'exposé dans la revendication 27 et comprenant, en outre, des moyens pour scinder ledit axe optique d'auto-focalisation en des première et seconde branches ayant des éléments anamorphes à polarisations opposées, qui imposent une distorsion à la forme du faisceau de lumière envoyé à travers eux, et dans lequel lesdits moyens de détection d'auto-focalisation comportent un premier détecteur de forme d'image, associé à ladite première branche, et un second détecteur de forme d'image, associé à ladite seconde branche, les signaux de sortie desdits détecteurs de forme d'image étant utilisés par lesdits moyens électroniques pour déterminer si ledit faisceau de lumière est focalisé au niveau dudit plan d'examen et, s'il n'est pas focalisé, pour déterminer le degré et la direction dans lesquels le faisceau s'écarte de la focalisation.

29. Système de contrôle optique tel qu'exposé dans la revendication 28, dans lequel lesdits premier et second détecteurs de forme d'image sont des détecteurs de composantes en quadrature, convenablement orientés.

30. Système de contrôle optique tel qu'exposé dans la revendication 29, dans lequel lesdits moyens électroniques mesurent l'amplitude desdits signaux de balayage correspondant à des points de grille prédéterminés sur la surface du substrat sous examen, puis utilisent ces mesures pour déterminer les dimensions de la surface de détails du substrat.

31. Système de contrôle optique tel qu'exposé dans la revendication 30, dans lequel lesdits moyens formant platine consistent en une platine à paliers à air X/Y, entraînée par des moteurs linéaires comprenant des stators et des coulisseaux séparés par des moyens formant paliers à air, les stators étant dotés d'une configuration leur permettant de précharger les paliers à air de chaque coulisseau dans au moins deux directions.

32. Système de contrôle optique tel qu'exposé dans la revendication 31, dans lequel lesdits moyens optiques comportent des moyens qui peuvent être utilisés pour faire pivoter la direction de déflexion dudit faisceau de lumière, afin qu'il soit dans une relation mutuelle voulue par rapport audit trajet prédéterminé.

33. Système de contrôle optique tel qu'exposé dans la revendication 15, dans lequel lesdits moyens de détection de lumière comportent un premier détecteur destiné à détecter l'intensité de la lumière réfléchie par ledit substrat et à engendrer des premiers signaux de balayage proportionnés à cette intensité.

34. Système de contrôle optique tel qu'exposé dans la revendication 33, dans lequel lesdits moyens de détection de lumière comportent, en outre, un second détecteur destiné à détecter l'intensité de la lumière provenant dudit faisceau qui traverse le substrat sous examen, et à engendrer des seconds signaux de balayage proportionnés à cette intensité.

35. Système de contrôle optique tel qu'exposé dans la revendication 34, dans lequel lesdits moyens électroniques comparent lesdits premiers et seconds signaux de balayage à des premiers et seconds signaux de référence, et déterminent à la fois la présence et la nature de tout défaut rencontré.

36. Système de contrôle optique tel qu'exposé dans la revendication 35 et comprenant, en outre, des moyens définissant un axe optique d'auto-focalisation, qui coupe ledit premier axe optique, et comportant un moyen pour introduire un astigmatisme dans le faisceau réfléchi par la surface du substrat examiné, ainsi que des moyens de détection d'auto-focalisation destinés à mesurer la forme du faisceau astigmatisé et à déterminer, à partir de celle-ci, le degré de focalisation du faisceau sur le substrat, lesdits moyens de détection d'auto-focalisation engendrant des signaux de correction destinés à être appliqués à l'entrée desdits moyens électroniques.

37. Système de contrôle optique tel qu'exposé dans la revendication 36 et comprenant, en outre, des moyens pour scinder ledit axe optique d'auto-focalisation en des première et seconde branches ayant des éléments anamorphes à polarisations opposées, qui imposent une distorsion à la forme du faisceau de lumière envoyé à travers eux, et dans lequel lesdits moyens de détection d'auto-focalisation comportent un premier détecteur de forme d'image, associé à ladite première branche, et un second détecteur de forme d'image, associé à ladite seconde branche, les signaux de sortie desdits détecteurs de forme d'image étant utilisés par lesdits moyens électroniques pour déterminer si ledit faisceau de lumière est focalisé au niveau dudit plan d'examen et, s'il n'est pas focalisé, pour déterminer le degré et la direction dans lesquels le faisceau s'écarte de la focalisation.

38. Système de contrôle optique tel qu'exposé dans la revendication 37, dans lequel lesdits moyens électroniques mesurent l'amplitude desdits signaux de balayage correspondant à des points de grille prédéterminés sur la surface du substrat sous examen, puis utilisent ces mesures pour déterminer les dimensions de la surface de détails du substrat.

39. Système de contrôle optique tel qu'exposé dans la revendication 38, dans lequel lesdits moyens formant platine consistent en une platine à paliers à air X/Y, entraînée par des moteurs linéaires comprenant des stators et des coulisseaux séparés par des moyens formant paliers à air, les stators étant dotés d'une configuration leur permettant de précharger les paliers à air de chaque coulisseau dans au moins deux directions.

40. Système de contrôle optique tel qu'exposé dans l'une quelconque des revendications 1 à 4, dans lequel lesdits moyens de détection de lumière comportent un détecteur de transmission, disposé le long dudit premier axe optique, du côté dudit plan d'examen opposé au côté comprenant lesdits moyens formant laser, et agissant pour détecter la lumière transmise traversant un substrat examiné, et dans lequel lesdits moyens optiques comportent, en outre, des moyens définissant un deuxième axe optique le long duquel ledit faisceau de lumière peut être envoyé, ledit deuxième axe optique ne croisant pas ledit substrat examiné, mais ayant au moins une partie commune avec ledit premier axe optique et croisant ledit détecteur de transmission, grâce à quoi une comparaison interférométrique entre ledit faisceau de lumière et ladite lumière transmise peut être conduite.

41. Système de contrôle optique tel qu'exposé dans la revendication 40, dans lequel lesdits moyens optiques comportent également des moyens définissant un troisième axe optique, le long duquel ledit faisceau de lumière peut être envoyé et qui présente une partie commune avec une partie dudit premier axe optique, les longueurs de trajet optique desdits deuxième et troisième axes optiques étant sensiblement égales, de sorte que les deux axes subissent des variations thermiques sensiblement identiques, ledit troisième axe optique comprenant un miroir incliné pour déplacer spatialement et réfléchir le faisceau de lumière déplacé spatialement en le renvoyant le long dudit troisième axe optique et sur ledit détecteur de réflexion, en vue d'une comparaison interférométrique avec la lumière réfléchie le long dudit premier axe optique par le substrat examiné.

42. Système de contrôle optique tel qu'exposé dans la revendication 10, et comportant, en outre, des moyens formant circuit, sensibles auxdits premiers et seconds signaux de balayage et agissant pour former des signaux commandés par porte, destinés à être appliqués à l'entrée desdits moyens électroniques, afin d'indiquer des défauts dans le substrat examiné, en fonction de l'erreur de phase entre la lumière réfléchie par la surface du substrat et la lumière traversant le substrat examiné.

43. Système de contrôle optique tel qu'exposé dans la revendication 42, dans lequel lesdits moyens formant circuit comportent:

un détecteur de phase analogique destiné à comparer ledit premier signal de balayage à un signal de référence, afin de former un signal analogique proportionnel à la différence de phase entre eux,
des moyens pour convertir ledit signal analogique en un signal numérique, et
des moyens de codage, déclenchés par ledit second signal de balayage, et agissant pour engendrer lesdits signaux commandés par porte.

44. Procédé d'examen de substrats choisis dans le groupe constitué des masques de photogravure, des réticules, des masques de déphasage et des plaquettes en semiconducteur, comprenant les étapes qui consistent:

à transporter un substrat à examiner le long d'un trajet prédéterminé dans un plan d'examen;
à diriger un faisceau de lumière le long d'un premier axe optique coupant ledit plan d'examen et à focaliser ledit faisceau de lumière, afin qu'il projette un point lumineux d'une taille sélectionnée sur le substrat à examiner;
à animer ledit faisceau de lumière d'un mouvement de balayage sur un mode oscillatoire, d'un côté de l'intersection de l'axe optique avec le substrat, à un autre, par l'intermédiaire de moyens pour faire pivoter la direction de balayage, le balayage se faisant dans une direction transversale audit trajet prédéterminé, ce qui fait que des zones intéressées du substrat, qui comportent au moins l'un desdits objets, sont balayées en bandes dont la largeur est déterminée par les limites de balayage du faisceau;
à détecter des variations de l'intensité dudit faisceau de lumière, induites par sa rencontre avec des zones d'éléments d'image du substrat examiné, et à former des signaux de balayage correspondant à ces variations;
à échantillonner lesdits signaux de balayage afin de produire des signaux d'échantillon d'élément d'image, et
à comparer lesdits signaux d'échantillon d'élément d'image à des signaux de référence correspondants, et à utiliser les différences existant entre eux pour identifier des défauts dans le substrat examiné.

45. Procédé d'examen de substrats choisis dans le groupe constitué des masques de photogravure, des réticules, des masques de déphasage et des plaquettes en semiconducteur, comprenant les étapes qui consistent:

à transporter un substrat à examiner le long d'un trajet prédéterminé dans un plan d'examen;
à produire un faisceau de lumière éclairant un élément d'image;
à prévoir des moyens optiques définissant un premier axe optique qui coupe ledit plan d'examen et propageant ledit faisceau de lumière éclairant un élément d'image le long dudit axe optique, et à focaliser sélectivement ledit faisceau de lumière afin qu'il projette un point lumineux sur le substrat à examiner, la taille du point lumineux déterminant au moins une dimension d'un élément d'image du substrat;
à faire que ledit faisceau de lumière balaie transversalement, sur un mode oscillatoire, la surface dudit substrat, d'un côté à un autre de l'intersection dudit axe optique avec ledit substrat et dans une direction transversale audit trajet prédéterminé, pendant que le substrat est transporté le long dudit trajet prédéterminé, et à faire pivoter la direction de balayage dudit faisceau de lumière, afin que ledit faisceau de lumière soit dans une relation mutuelle voulue par rapport audit trajet prédéterminé, les limites de déflexion dudit faisceau de lumière, d'un côté dudit trajet à l'autre, définissant la largeur d'une bande de balayage sur une zone intéressée du substrat, qui comporte au moins une partie de l'un desdits objets;
à détecter des variations de l'intensité dudit faisceau de lumière, induites par sa rencontre avec des zones d'éléments d'image du substrat examiné, et à former des signaux de balayage correspondant à ces variations;
à échantillonner lesdits signaux de balayage pour produire des signaux d'échantillon d'élément d'image; et
à comparer lesdits signaux d'échantillon d'élément d'image à des signaux de référence correspondants, les différences entre eux pouvant être utilisées pour identifier des défauts dans le substrat examiné.

46. Procédé d'examen de substrats, tels que des masques de photogravure, des réticules, des masques de déphasage et des plaquettes en semiconducteur, comprenant les étapes qui consistent:

à transporter un substrat à examiner le long d'un trajet prédéterminé dans un plan d'examen;
à utiliser un moyen formant laser pour produire un faisceau de lumière éclairant un élément d'image;
à prévoir un moyen optique définissant un premier axe optique qui coupe ledit plan d'examen et le long duquel ledit faisceau de lumière éclairant un élément d'image est envoyé, ledit moyen optique intervenant pour focaliser ledit faisceau de lumière afin qu'il projette un point lumineux sur le substrat à examiner, la taille du point lumineux déterminant au moins une dimension d'un élément d'image du substrat;
à imposer audit faisceau de lumière une déflexion sur un mode oscillatoire, en travers de la surface dudit substrat, d'un côté de l'intersection dudit axe optique avec ledit substrat, à un autre, et dans une direction transversale audit trajet prédéterminé, pendant que le substrat est transporté le long dudit trajet prédéterminé, et à faire pivoter la direction de déflexion dudit faisceau de lumière, afin que ledit faisceau de lumière soit dans une relation mutuelle voulue par rapport audit trajet prédéterminé, les limites de déflexion dudit faisceau de lumière, d'un côté dudit trajet à l'autre, définissant la largeur d'une bande de balayage sur des zones intéressées du substrat, qui comportent au moins une partie de l'un desdits objets;

à détecter des variations de l'intensité dudit faisceau de lumière, induites par sa rencontre avec des zones d'éléments d'image du substrat examiné, et à former des signaux de balayage correspondant à ces variations;

à comparer lesdits signaux de balayage à des signaux de référence correspondants et à utiliser les différences entre eux pour identifier des défauts dans le substrat examiné;

à enregistrer les emplacements desdits défauts sur ledit substrat;

à contraindre, par la suite, lesdits moyens formant platine à repositionner le substrat examiné, d'une façon telle qu'un emplacement précédemment enregistré d'un défaut sélectionné soit continuellement coupé par ledit axe optique;

à animer ledit faisceau de lumière d'un mouvement de balayage en va-et-vient dans une direction orthogonale à la déflexion provoquée par lesdits moyens de déflexion de faisceau, afin d'amener lesdits moyens de détection de lumière à engendrer en continu des signaux d'affichage représentatifs du défaut sélectionné; et

à utiliser lesdits signaux d'affichage afin de réaliser un affichage visuel du défaut sélectionné.

47. Procédé d'examen de substrats choisis dans le groupe constitué des masques de photogravure, des réticules, des masques de déphasage et des plaquettes en semiconducteur, comprenant les étapes qui consistent:

à utiliser un moyen formant laser pour produire un faisceau de lumière éclairant un élément d'image;

à prévoir des moyens optiques définissant un premier axe optique le long duquel ledit faisceau de lumière éclairant un élément d'image est envoyé;

à déplacer un substrat à examiner dans un plan d'examen, que coupe ledit axe optique, d'une façon telle que le point d'intersection suive un trajet sinueux sur au moins une partie du substrat, qui comporte au moins l'un des objets;

à soumettre ledit faisceau de lumière à une déflexion sur un mode oscillatoire, d'un côté de l'intersection dudit axe optique avec ledit substrat, à un autre, par l'intermédiaire de moyens pour faire pivoter la direction de déflexion, la déflexion se faisant dans une direction transversale audit trajet prédéterminé, de telle sorte que, pendant que le substrat est transporté le long dudit trajet prédéterminé, la déflexion dudit faisceau de lumière, d'un côté dudit trajet à l'autre, définisse une bande de balayage sur la partie du substrat;

à détecter des variations de l'intensité dudit faisceau de lumière, induites par des zones d'éléments d'image du substrat examiné, éclairées par ledit faisceau de lumière, et à former des signaux de balayage correspondant à ces variations; et

à comparer lesdits signaux de balayage à des signaux de référence correspondants, les différences entre eux pouvant être utilisées pour identifier des défauts dans le substrat examiné, et à enregistrer l'emplacement desdits défauts sur ledit substrat.

48. Procédé d'examen de substrats choisis dans le groupe constitué des masques de photogravure, des réticules, des masques de déphasage et des plaquettes en semiconducteur, comportant une multiplicité d'objets dessinés en motif, supposés être identiques et disposés selon un arrangement ordonné sur l'une de leurs surfaces, procédé qui comprend les étapes consistant:

à utiliser un moyen formant laser pour produire un faisceau de lumière éclairant un élément d'image;

à utiliser un moyen optique pour définir un premier axe optique le long duquel ledit faisceau de lumière éclairant un élément d'image est envoyé;

à utiliser un moyen formant platine pour déplacer un substrat à examiner dans un plan d'examen que coupe ledit axe optique, d'une façon telle que le point d'intersection suive un trajet sinueux sur au moins une partie du substrat, qui comporte au moins l'un des objets;

à soumettre ledit faisceau de lumière à une déflexion sur un mode oscillatoire, d'un côté de l'intersection dudit axe optique avec ledit substrat, à un autre, par l'intermédiaire de moyens pour faire pivoter la direction de déflexion, la déflexion se faisant dans une direction transversale audit trajet prédéterminé, de telle sorte que, pendant que le substrat est transporté le long dudit trajet prédéterminé, la déflexion dudit faisceau de lumière, d'un côté dudit trajet à l'autre, définisse une bande de balayage sur la partie du substrat;

à faire pivoter ledit faisceau de lumière soumis à la déflexion, afin qu'il soit dans une relation mutuelle voulue par rapport audit trajet prédéterminé;

à détecter des variations de l'intensité dudit faisceau de lumière, induites par des zones d'éléments d'image du substrat examiné, éclairées par ledit faisceau de lumière, et à former des signaux de balayage correspondant à ces variations;

à mémoriser des premiers signaux de balayage, formés pendant que ladite bande de balayage passe sur un premier objet dessiné en motif, et à comparer les premiers signaux de balayage mémorisés à des seconds signaux de balayage qui sont formés au moment où la bande de balayage passe sur un second objet dessiné en motif, et à utiliser les différences existant entre eux pour identifier des défauts dans le substrat examiné; et

à enregistrer les emplacements desdits défauts sur ledit substrat.

FIG. 1

FIG. 2

FIG. 3

FIG. 5

FIG. 4

FIG. 6

EP 0 532 927 B1

34

FIG. 7

FIG. 8

FIG. 9

FIG. 10

FIG. II

FIG. I2

FIG. 13A

FIG. 13B

FIG. 14

EP 0 532 927 B1